(19) Europäisches Patentamt
European Patent Office
Office européen des brevets

(11) **EP 4 742 728 A1**

(12) **EUROPEAN PATENT APPLICATION**
published in accordance with Art. 153(4) EPC

(43) Date of publication:
**13.05.2026 Bulletin 2026/20**

(21) Application number: 24851933.2

(22) Date of filing: **08.08.2024**

(51) International Patent Classification (IPC):
*H04W 16/26* (2009.01)    *H04B 7/15* (2006.01)
*H04B 17/336* (2015.01)    *H04W 24/00* (2009.01)
*H04W 72/54* (2023.01)

(52) Cooperative Patent Classification (CPC):
**H04B 7/15; H04B 17/336; H04W 16/26;**
**H04W 24/00; H04W 72/54; H04W 76/10**

(86) International application number:
**PCT/JP2024/028541**

(87) International publication number:
**WO 2025/033516 (13.02.2025 Gazette 2025/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.08.2023  JP 2023131050**

(71) Applicant: **TOYOTA JIDOSHA KABUSHIKI**
**KAISHA**
**Toyota-Shi,**
**Aichi-Ken 471-8571 (JP)**

(72) Inventor: **TAKIZAWA Kenichi**
**Koganei-shi, Tokyo 184-8795 (JP)**

(74) Representative: **Simmons & Simmons**
**City Point**
**One Ropemaker Street**
**London EC2Y 9SS (GB)**

(54) **CONTROL DEVICE, RELAY STATION, AND CONTROL METHOD**

(57)    To appropriately perform communication in a case where non-regenerative relay is used. A control apparatus according to an aspect of the present disclosure includes: a control unit that specifies a second terminal station with a concern of interference with non-regenerative relay between a base station and a first terminal station via a relay station; and a communication unit that notifies the relay station of a stop of the non-regenerative relay in a case where a first condition related to a reception signal-to-interference plus noise ratio (SINR) of a signal received by the second terminal station from the base station is satisfied at a timing at which the non-regenerative relay is performed.

FIG. 6

## Description

Technical Field

The present disclosure relates to a control apparatus, a relay station, and a control method in a mobile communication system.

Background Art

In regard to a New Radio (NR) technical specification in the 3rd Generation Partnership Project (3GPP (registered trademark)) which is a mobile communication system standardization project, non-regenerative relay has been introduced as a low-delay relay technology (for example, Non Patent Literature 1). In the non-regenerative relay, it is possible to perform relay with a low delay since demodulation and decoding are not performed in relay stations.

Citation List

Non Patent Literature

Non Patent Literature 1: 3GPP TS 38.106 V18.1.0(2023-06)

Summary of Invention

Technical Problem

However, in a case where non-regenerative relay is performed, there is a concern that terminal stations that do not use relay may be interfered with by the non-regenerative relay, which may lead to degradation of communication quality or a decrease in communication throughput.
Therefore, one of objects of the present disclosure is to provide a control apparatus, a relay station, and a control method enabling appropriate communication in a case where non-regenerative relay is used.

Solution to Problem

A control apparatus according to an aspect of the present disclosure includes: a control unit that specifies a second terminal station with a concern of interference with non-regenerative relay between a base station and a first terminal station via a relay station; and a communication unit that notifies the relay station of a stop of the non-regenerative relay in a case where a first condition related to a reception signal-to-interference plus noise ratio (SINR) of a signal received by the second terminal station from the base station is satisfied at a timing at which the non-regenerative relay is performed.

Advantageous Effects of Invention

According to an aspect of the present disclosure, communication can be appropriately performed in a case where non-regenerative relay is used.

Brief Description of Drawings

Fig. 1 is a diagram illustrating an example of a schematic configuration of a system according to an embodiment of the present disclosure.
Fig. 2 is a diagram illustrating an example of a schematic functional configuration of each apparatus according to an embodiment of the present disclosure.
Fig. 3 is a diagram illustrating an example of a hardware configuration of each apparatus according to an embodiment of the present disclosure.
Figs. 4A and 4B are diagrams illustrating an example of a variation of a hardware configuration of a base station according to an embodiment of the present disclosure.
Figs. 5A to 5D are diagrams illustrating an example of a problem related to non-regenerative relay.
Fig. 6 is a diagram illustrating an example of a first control flow according to an embodiment of the present disclosure.

Fig. 7 is a diagram illustrating an example of parameters for calculating $\gamma_{RX,min}^{UEi}$.

Fig. 8 is a diagram illustrating an example of a value of $D^{UEi}$.

Fig. 9 is a diagram illustrating an example of parameters for calculating $\gamma_{RX}^{UEi}$.

Fig. 10 is a diagram illustrating an example of a second control flow according to an embodiment of the present disclosure.

Fig. 11 is a diagram illustrating an example of a third control flow according to an embodiment of the present disclosure.

Fig. 12 is a diagram illustrating an example of SS-SINR measurement report mapping.

Fig. 13 is a diagram illustrating an example of parameters for calculating $I^{R \rightarrow UEi}$.

Fig. 14 is a diagram illustrating an example of parameters for calculating $\gamma_{RX}^{UEi,1}$.

Fig. 15 is a diagram illustrating an example of parameters for calculating $\gamma_{RX,min}^{UEi}$ in a case where relay stations $R_1$ and $R_2$ are about to perform non-regenerative relay.

Fig. 16 is a diagram illustrating an example of parameters for calculating $\gamma_{RX}^{UEi}$ in a case where the relay stations $R_1$ and $R_2$ perform non-regenerative relay.

Description of Embodiments

Hereinafter, embodiments of the present disclosure will be described in detail with reference to the drawings. Note that in the present specification and the drawings, elements that can be similarly described will be denoted by the same reference numerals, and repeated description may thus be omitted.

In the present disclosure, "A/B" and "at least one of A and B" may be interchangeably read. Furthermore, in the present disclosure, "A/B/C" may mean "at least one of A, B, and C".

<Configuration of System>

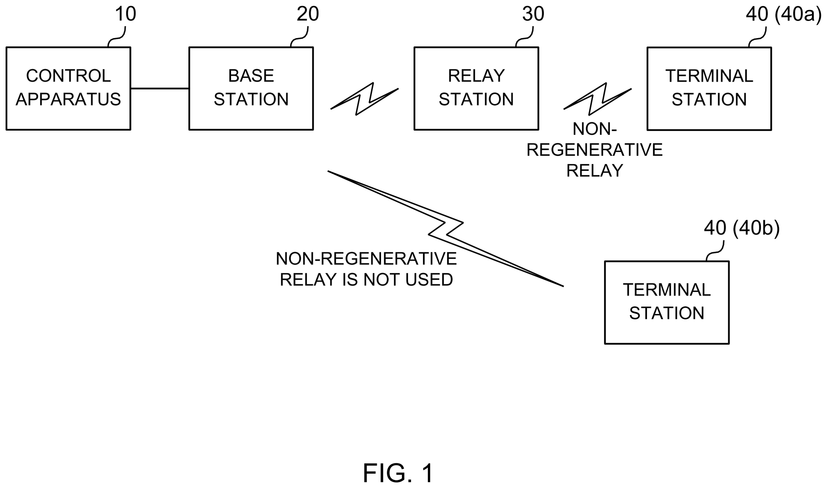

Fig. 1 is a diagram illustrating an example of a schematic configuration of a system according to an embodiment of the present disclosure. A system 1 includes a control apparatus 10, a base station 20, a relay station 30, and a terminal station 40. The system 1 may be referred to as a wireless communication system, an information communication system, or the like.

For example, the system 1 is a system conforming to the 3GPP technical specifications (TS). More specifically, the system 1 is a system conforming to the TS of 5th generation mobile communication system (5G) or New Radio (NR), for example.

Note that the system 1 is not limited to this example and may include systems using Long Term Evolution (LTE), LTE-Advanced (LTE-A), 4th generation mobile communication system (4G), 5th generation mobile communication system (5G), 6th generation mobile communication system (6G), xth generation mobile communication system(xG (x is, for example, an integer or a decimal)), New Radio (NR), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other wireless communication methods, and next-generation systems extended, modified, created, or defined based on these systems.

In the system 1, a communication link directed (received) to the base station 20/outgoing from the terminal station 40 (transmitted) may be referred to as an uplink (UL), and a communication link outgoing (transmitted) from the base station 20/directed (received) to the terminal station 40 may be referred to as a downlink (DL).

The control apparatus 10 may be a apparatus on a core network to which the base station 20 is connected. The control apparatus 10 may be referred to as a network node and may provide network functions (NFs). The NFs may be, for example, at least one of an access and mobility management function (AMF), an application function (AF), a data network (DN), a location management function (LMF), an operation, administration, and maintenance (management) (OAM), a session management function (SMF), unified data management (UDM), a user plane function (UPF), and the like.

The core network includes, for example, an optical fiber network. In the present disclosure, the network and the core network may be interchangeably read.

The control apparatus 10 may control at least one of the base station 20, the relay station 30, and the terminal station 40 to perform control for providing a communication service between the base station 20/the relay station 30 and the terminal station 40. Note that the control apparatus 10 may be included in the base station 20.

The base station 20 provides a radio access network (RAN) to the terminal station 40. An area in which wireless communication is possible in the radio access network is also referred to as a cell. The base station 20 is, for example, a gNB. The gNB is a node that provides NR user plane and control plane protocol terminations towards user equipment (UE) and is connected to a 5G core network (5GC) via an NG interface. The base station 100 may be an en-gNB. The en-gNB is a node that provides NR user plane and control plane protocol terminations towards the UE and operates as a secondary node in the E-UTRA-NR Dual Connectivity (EN-DC).

The relay station 30 performs non-regenerative relay for communication between the base station 20 and the terminal station 40. In the non-regenerative relay, since relayed signal is not demodulated/decoded, communication can be relayed with a delay that does not change a slot timing. In the present disclosure, the non-regenerative relay may mean relay (transfer) that is not accompanied by demodulation/decoding processing, amplification and transfer of a UL/DL radio signal between the base station and the terminal station, repeat, and the like. Note that in the present disclosure, relay, transfer, repeat, transmission, and the like may be interchangeably read.

The relay station 30 may be a radio frequency (RF) repeater, a network-controlled repeater (NCR), an integrated access and backhaul (IAB), or another repeater. The relay station 30 may be referred to as, for example, a small base station, a mobile base station, a relay base station, or the like.

For example, the NCR may include NCR-mobile termination (NCR-MT) and NCR-forwarding (NCR-Fwd). The NCR-MT can communicate with (for example, receive configuration/control information from and send a request/report to) the base station 20 via a control link. The NCR-Fwd can relay communication between the base station 20 and the terminal station 40 by performing relay/amplification from a backhaul link (with the base station 20) to an access link (with the terminal station 40) and relay/amplification from the access link to the backhaul link.

The relay station 30 may perform non-regenerative relay for a plurality of terminal stations 40 using different frequency resources, or may perform non-regenerative relay using the same frequency resource. The relay station 30 may transmit non-regenerative relay signals to the plurality of terminal stations 40 using frequency division multiplexing (FDM), time division multiplexing (TDM), space division multiplexing (SDM), or other multiplexing methods.

One or more relay stations 30 may share information regarding resources (for example, frequency/time resources, resource blocks (RBs)) used by each terminal station 40. A notification of the information may be provided between the relay stations 30 or may be provided from the base station 20 to the relay stations 30.

Each terminal station 40 is connected to the radio access network in the above-described cell and corresponds to the UE. The terminal station 40 may be, for example, a portable terminal (mobile communication terminal) such as a smartphone, a tablet terminal, or a wearable terminal, or may be a fixed communication terminal. Each terminal station 40 may be able to directly receive a control signal transmitted by the base station 20 or may be able to receive the control signal via the relay station 30.

In the present disclosure, a terminal station to which non-regenerative relay communication is applied (in other words, a terminal station that communicates with the base station 20 via the relay station 30) will also be referred to as a terminal station 40a, and a terminal station to which non-regenerative relay communication is not applied (in other words, a terminal station that communicates with the base station 20 without intervention of the relay station 30) will also be referred to as a terminal station 40b. In a case where the simple description of terminal stations 40 is used, both the terminal station 40a and the terminal station 40b may be included. The terminal station that is a non-regenerative relay target (terminal station 40a) may be referred to as a first terminal station. The terminal station that is not a non-regenerative relay target (terminal station 40b) may be referred to as a second terminal station.

Note that each of the base station 20, the relay stations 30, the terminal stations 40, and the like may include a fixed station that is installed at a fixed installation location and may include a mobile station.

The non-regenerative relay signal in DL communication may correspond to a signal transmitted from the relay station 30 to each terminal station 40. The non-regenerative relay signal in UL communication may correspond to a signal transmitted from the relay station 30 to the base station 20.

Note that TDM or time division duplex (TDD) that performs UL communication and DL communication in the same frequency channel may be used in the system 1. In the system 1, slot/frame timings may be synchronized (aligned) among all the stations in the system 1.

In the system 1, cyclic prefix-orthogonal frequency division multiplexing (CP-OFDM) (or multicarrier waveform) may be used or discrete Fourier transform-spread-orthogonal frequency division multiplexing (DFT-s-OFDM) (or single-carrier waveform) may be used for at least either the UL communication or the DL communication. In the system 1, other waveforms (for example, filtered OFDM (F-OFDM)) may be used for UL/DL communication.

<Configuration of Each Apparatus>

An example of a configuration of each apparatus (the control apparatus 10, the base station 20, the relay station 30, and the terminal station 40) according to the embodiment of the present disclosure will be described.

(Functional Configuration)

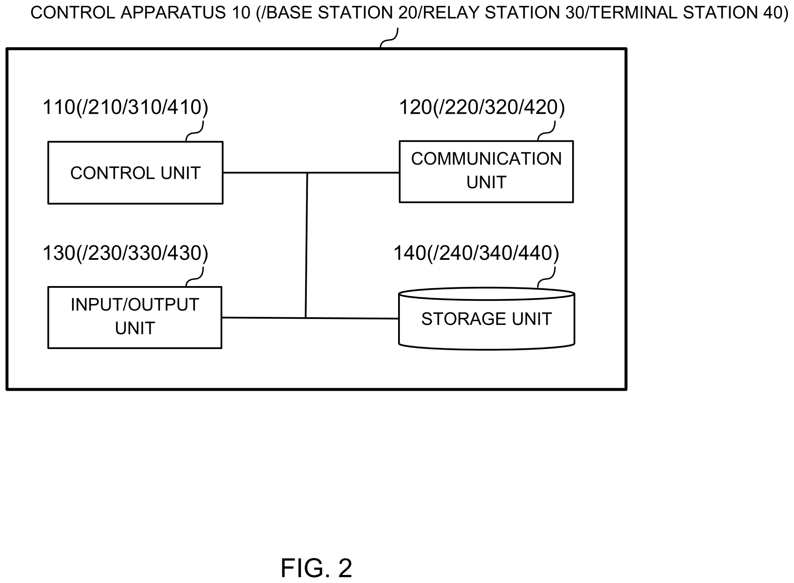

Fig. 2 is a diagram illustrating an example of a schematic functional configuration of each apparatus according to an embodiment of the present disclosure. For example, the control apparatus 10 includes a control unit 110, a communication unit 120, an input/output unit 130, and a storage unit 140.

Note that the base station 20, the relay station 30, and the terminal station 40 may have similar functional configurations. For this reason, Fig. 2 also illustrates, as a reference sign for a functional block corresponding to each apparatus, a reference sign obtained by replacing the number of the highest-order digit of the reference sign indicating each apparatus (for example, "2" that is the highest-order digit of "20" in the case of the base station 20) with "1". Although functional blocks related to the control apparatus 10 will be described below, it will be understood that other apparatuses can also be similarly described.

In this example, functional blocks of characteristic parts in the present embodiment are mainly illustrated, and each apparatus may also have other functional blocks necessary for other processing. In addition, a configuration not including some of the functional blocks may be adopted.

The control unit 110 controls the control apparatus 10 and provides various functions. For example, the control unit 110 may control communication with other apparatuses via the communication unit 120. Furthermore, the control unit 110 may acquire information necessary for processing based on information received via the communication unit 120. The control unit 110 may be referred to as a processing unit.

The communication unit 120 performs communication (transmission/reception) with other apparatuses via a network. The communication unit 120 may output information obtained from a received signal to the control unit 110, or may convert information input from the control unit 110 into a signal and transmit the signal. The communication unit 120 may be referred to as a transmission unit, a reception unit, a transmission/reception unit, or the like.

The input/output unit 130 may include an input unit that receives an input by a user's operation. The input unit may be connected to a given apparatus, a storage medium, or the like and receive an input of data. The input unit may output an input result to, for example, the control unit 110.

Furthermore, the input/output unit 130 may include an output unit that outputs data, content, and the like in a format perceptible to the user. The output unit may be configured to include a display unit that displays an image, a sound output unit that outputs sound, and the like.

The storage unit 140 stores (holds) various kinds of information to be used for processing by the control apparatus 10. The control unit 110 may provide an instruction to read or write data to the storage unit 140.

(Hardware Configuration)

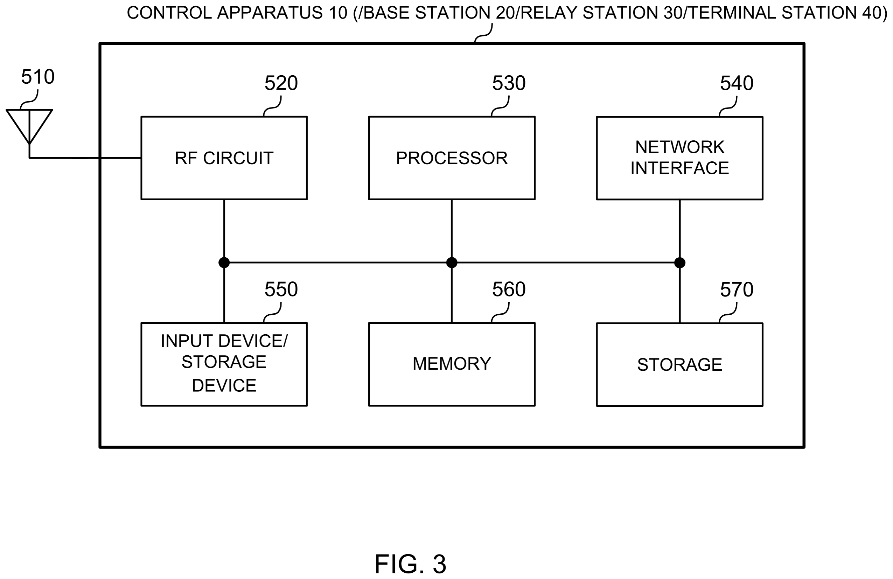

Fig. 3 is a diagram illustrating an example of a schematic hardware configuration of each apparatus according to an embodiment of the present disclosure. Each apparatus includes an antenna 510, a radio frequency (RF) circuit 520, a processor 530, a network interface 540, an input apparatus/output apparatus 550, a memory 560, and a storage 570.

Note that the hardware configuration of each apparatus may include one or more of the elements illustrated in Fig. 3 or may not include some of the elements. For example, the relay station 30 and the terminal station 40 may not have the network interface 540.

The antenna 510 converts a signal into a radio wave and emits the radio wave into space. Furthermore, the antenna 510 receives a radio wave in space and converts the radio wave into a signal. The antenna 510 may include a transmission antenna and a reception antenna or may include a single antenna for transmission and reception. The antenna 510 may include a directional antenna or may include a plurality of antenna elements.

A plurality of antennas 510 may be mounted. For example, the relay station 30 may have an antenna independent of an antenna used for a relay line in order for the control unit 310 to receive a notification related to control.

The RF circuit 520 performs analog processing of signals transmitted and received via the antenna 510. The RF circuit 520 may include a filter (for example, a high-frequency filter and a low-pass filter), an amplifier, a modulator, a frequency synthesizer, an analog-to-digital conversion circuit, a digital-to-analog conversion circuit, an inverse fast Fourier transform (IFFT) processing circuit, and the like.

The RF circuit 520 may perform amplification, filtering, demodulation into a baseband signal, and the like on the received signal of a radio frequency band, and output the signal to the processor 530. The RF circuit 520 may perform modulation to a radio frequency band, filtering, amplification, and the like on a baseband signal input from the processor 530, and transmit a signal in the radio frequency band via the transmission/reception antenna 510. Note that the RF circuit 520 may perform physical layer processing (for example, processing of lower functions of a physical layer) or may perform beamforming processing such as analog beamforming processing and digital beamforming processing.

The processor 530 may control the entire apparatus. The processor 530 may read a program (program code), software (software module), data, and the like from the storage 570 to the memory 560, and execute various kinds of processing according thereto. The processor 530 may be configured by a central processing unit (CPU) including an interface with a peripheral apparatus, a control apparatus, an arithmetic operation apparatus, a register, and the like. In addition, the processor 530 may include a microprocessor, a digital signal processor (DSP), an application specific integrated circuit (ASIC), a programmable logic apparatus (PLD), a field programmable gate array (FPGA), and the like.

The processor 530 may perform digital processing on signals transmitted and received via the antenna 510 and the RF circuit 520. The digital processing may include processing of a physical layer (for example, processing of upper functions of the physical layer), processing of a medium access control (MAC) layer or higher layers, and processing such as modulation, demodulation, encoding, decoding, and scrambling. The processor 530 also processes signals transmitted and received via the network interface 540.

The processor 530 may include a plurality of processors or may be a single processor. The plurality of processors may include a baseband processor that performs the digital processing and one or more processors that perform other processing (for example, overall control).

The network interface 540 is, for example, a network adapter, and may be connected to an external network in a wired manner to transmit and receive signals.

Note that the RF circuit 520/baseband processor/network interface 540 may have an integrated configuration. The RF circuit 520/baseband processor/network interface 540 may be referred to as a network controller, a network card, a communications module, or the like.

The input apparatus/output apparatus 550 includes an input apparatus (for example, a keyboard, a mouse, a microphone, a switch, a button, a sensor, and the like) that receives an input from the outside, an output apparatus (for example, a display, a speaker, a light emitting diode (LED) lamp, and the like) that performs output to the outside, a apparatus (for example, a touch panel) in which these are integrated, and the like.

The memory 560 is a computer-readable non-transitory recording medium, and stores a program to be executed by the processor 530, parameters related to the program, and various other kinds of information. The memory 560 may include at least one of a read only memory (ROM), an erasable programmable read only memory

(EPROM), an electrically erasable programmable read only memory (EEPROM), a random access memory (RAM), and a flash memory. An entirety or part of the memory 560 may be included in the processor 530. The memory 560 may be referred to as a register, a cache, a main memory (main storage apparatus), or the like.

The storage 570 is a computer-readable non-transitory recording medium and stores various kinds of information. The storage 570 may include, for example, at least one of a flexible disk, a floppy (registered trademark) disk, a magneto-optical disk (for example, a compact disc ROM (CD-ROM), a digital versatile disc, or a Blu-ray (registered trademark) disc), a removable disk, a hard disc drive (HDD), a smart card, a flash memory device (for example, a solid state drive (SSD)), and the like. The storage 570 may be referred to as an auxiliary storage apparatus.

In addition, each of the apparatuses including the processor 530 and the memory 560 may be connected by a bus for communicating information. A single bus may be used within each apparatus, or each different bus may be used between the apparatuses.

A control unit X10 (X = 1, 2, 3, 4; the same applies to the following description) may be implemented by the processor 530. A communication unit X20 may be implemented by the antenna 510/RF circuit 520/network interface 540. An input/output unit X30 may be implemented by the input apparatus/output apparatus 550. A storage unit X40 may be implemented by the memory 560/storage 570.

(Variations in Hardware Configuration of Base Station)

The communication processing functions of the base station (RAN) may be separated into three elements, namely a radio unit (RU), a distributed unit (DU), and a central unit (CU). The RU implements lower functions of RF processing and the physical layer. The DU implements upper functions of the physical layer, functions of a MAC layer, and functions of a radio link control (RLC) layer. The CU implements functions of a packet data convergence protocol (PDCP) layer, a service data adaptation protocol (SDAP) layer, and a radio resource control (RRC) layer.

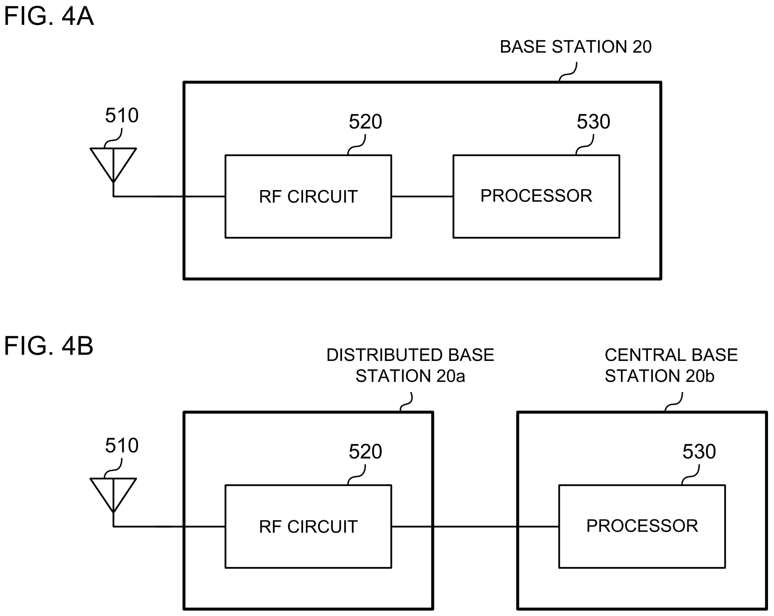

Figs. 4A and 4B are diagrams illustrating an example of the variations of a hardware configuration of the base station according to an embodiment of the present disclosure. Although only the antenna 510, the RF circuit 520, and the processor 530 are illustrated from among the elements described in Fig. 3 for simplicity in this example, the other elements may be included in a apparatus in which the processor 530 is included.

In Fig. 4A, one base station 20 includes an antenna 510, an RF circuit 520, and a processor 530. The base station 20 has a configuration in which an RU and a DU/CU are integrated.

In Fig. 4B, one base station 20a includes only an antenna 510 and an RF circuit 520, another base station 20b includes a processor 530, and these base stations are connected by an optical fiber line or the like. Since the former base station 20a has only the RU, the base station 20a may be referred to as a slave station, a distributed base station, or the like. Since the latter base station 20b has only the DU/CU, the base station 20b may be referred to as a master station, a central base station, or the like.

Note that a base station of the RU/DU and a base station of the CU may be connected, or a base station of the RU, a base station of the DU, and a base station of the CU may be connected.

In the present disclosure, the base station 20 may include one base station (node) that implements all the functions of the RU, the DU, and the CU as illustrated in Fig. 4A, or may include a plurality of base stations (nodes), each of which implements some of the functions of the RU, the DU, and the CU as illustrated in Fig. 4B. For example, the base station 20 may mean a base station constituted by the distributed base station 20a and the central base station 20b.

<Problem Analysis>

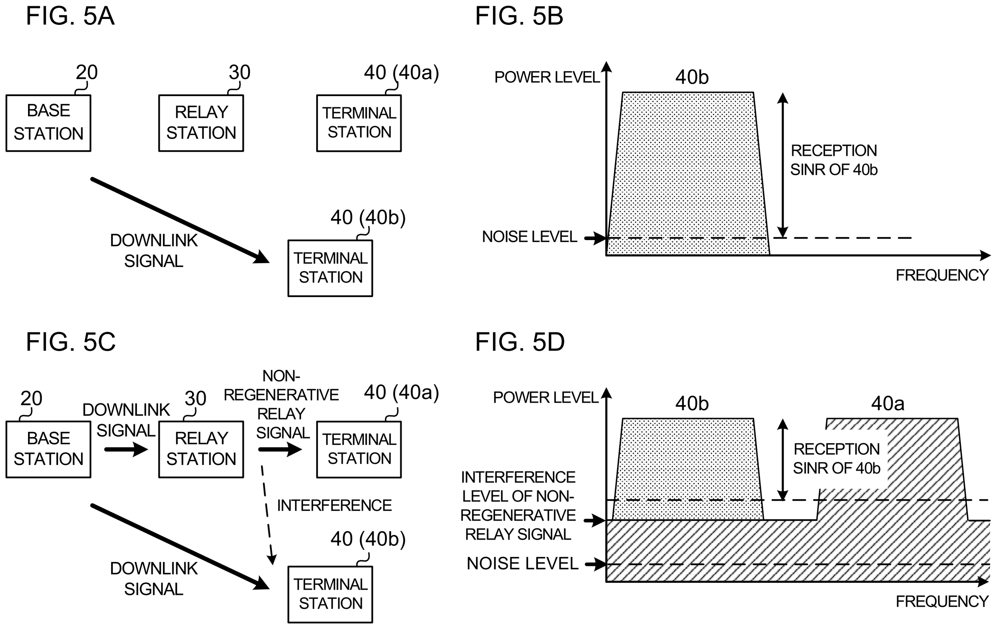

Figs. 5A to 5D are diagrams illustrating an example of problems related to non-regenerative relay. Figs. 5A and 5C correspond to diagrams extracting parts of Fig. 1. Note that in this example, it is assumed that a frequency resource of a signal transmitted from the base station 20 to the terminal station 40b and a frequency resource of a non-regenerative relay signal transmitted from the relay station 30 to the terminal station 40a deviate from each other (or do not overlap).

A reception signal-to-interference plus noise power ratio (SINR) of the terminal station 40b is obtained by the ratio (= P/(I + N)) of an interference power level I and a noise level N to a power level P of the reception signal of the terminal station 40. Note that in the present disclosure, the unit of each level may be decibel-milliwatts (dBm), dB, or the like.

In a case where the relay station 30 is not performing non-regenerative relay (or does not exist in the first place) in the system 1 as in Fig. 5A, there is no interference received by the terminal station 40b, and the reception SINR of the terminal station 40b thus becomes as illustrated in Fig. 5B.

On the other hand, in a case where the relay station 30 is performing non-regenerative relay in the system 1 as illustrated in Fig. 5C, not only a relayed signal but also unnecessary signals such as noise are amplified in the non-regenerative relay in the DL, for example, interference occurs due to the non-regenerative relay signal in a frequency region outside the frequency resource of the non-regenerative relay signal for the terminal station 40a as illustrated in Fig. 5D. Therefore, the reception SINR of the terminal station 40b in Fig. 5C is smaller than that in the case of Fig. 5A.

As described above, there is a concern that the terminal station 40b that does not use a relay may be interfered with by the non-regenerative relay using the relay station 30, communication quality thereof may be degraded, and the communication throughput thereof may be degraded.

Therefore, the present inventor has achieved an idea of stopping/resuming the non-regenerative relay of the relay station that may serve as a relatively large interference source for the terminal station that does not use the non-regenerative relay. In an aspect of the present disclosure, a terminal station (without non-regenerative relay) with a concern of interference in the non-regenerative relay in the downlink line is specified based on a transmission spectrum mask of the relay station. Thereafter, in a case where interference occurs in the terminal station (for example, in a case where the reception SINR of the terminal station is equal to or greater than the allowable value), the non-regenerative relay is stopped. Furthermore, in a case where it is determined that no interference will occur in the terminal station even if the non-regenerative relay is resumed during the stop of the non-regenerative relay, the non-regenerative relay is resumed.

<Operation Example>

Hereinafter, an example of operations of each apparatus according to the embodiment of the present disclosure will be described. The communication method (a wireless communication method and a control method) described below may be applied to the above-described system 1.

Note that in the following description of the present disclosure, reference numerals may be omitted. For example, the control apparatus in the following description may mean the control apparatus 10.

In the following description/drawings, the base station may be abbreviated as a BS, the relay station may be abbreviated as an R, and the terminal station may be abbreviated as a UE. In addition, parameters related to reception (reception signals) may be indicated by adding a subscript RX. In addition, parameters related to transmission (transmission signals) may be indicated by adding a subscript TX.

Each apparatus in the following description may be interchangeably read with one or more functional blocks (for example, the control unit 110 and the communication unit 120) or hardware configurations (for example, the RF circuit 520 and the processor 530) in the apparatus.

In an embodiment of the present disclosure, whether or not the relay station 30 functions as a relay station (performs non-regenerative relay) for a certain terminal station 40 may be selected by the control apparatus 10/base station 20/relay station 30. The relay station 30 may perform the non-regenerative relay in a semi-fixed/semi-permanent manner. Note that the relay station 30 may stop the non-regenerative relay in a case where there is an instruction to stop the non-regenerative relay from the base station 20/control apparatus 10, or in a case where a certain time has elapsed since the start of the non-regenerative relay or from a specific timing. Note that the stop may be interchangeably read with completion, end, and the like.

(First Control Flow)

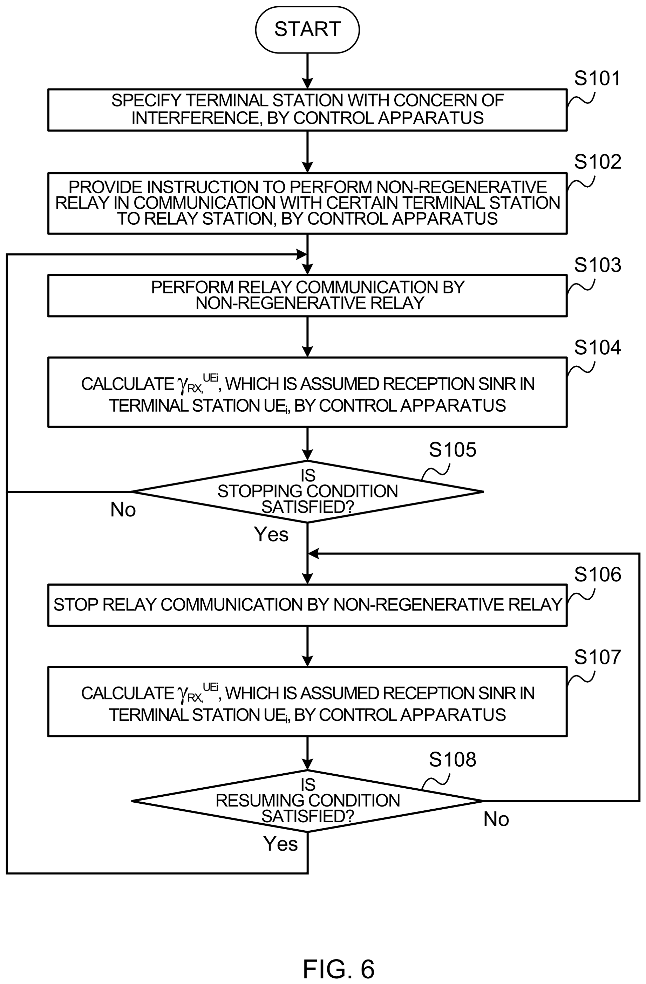

Fig. 6 is a diagram illustrating an example of a first control flow according to an embodiment of the present disclosure. In the first control flow, the control apparatus determines to stop/resume the non-regenerative relay.

In Step S101, the control apparatus specifies a terminal station (terminal station 40b) with a concern of interference in a case where the relay station performs non-regenerative relay. The terminal station $UE_i$ (i is, for example, an integer) with a concern of interference may be determined based on information regarding the reception SINR at a timing at which the non-regenerative relay is performed.

The information related to the reception SINR may be, for example, the worst value $\gamma_{RX,min}{}^{UEi}$ of the reception SINR (which may be referred to as an assumed reception SINR) estimated (assumed) for UE$_i$. The control apparatus may determine that the terminal station with a concern of interference in a case where the relay station performs the non-regenerative relay is the terminal station UE$_i$ satisfying $\gamma_{RX,min}{}^{UEi} \leq \gamma_{REQ}{}^{UEi}$.

Here, $\gamma_{REQ}{}^{UEi}$ is a threshold for determination and may be referred to as a required SINR. $\gamma_{REQ}{}^{UEi}$ may be different for each UE$_i$ or may be common in some UE$_i$. $\gamma_{REQ}{}^{UEi}$ may be determined based on at least one of the position of the UE$_i$, the assumed reception signal quality of the assumed reception signal quality of the assumed received signal power of the UE$_i$, a modulation and coding scheme (MCS) that can be used by the base station for communication with the terminal station UE$_i$, and the like. The MCS that can be used may be an MCS corresponding to a specific (for example, a maximum or minimum) or a desired coding rate that can be indicated for the terminal station UE$_i$ using downlink control information (DCI) for a physical downlink shared channel (PDSCH).

In other words, the terminal station with a concern of interference may correspond to a terminal station that has the worst value of the assumed reception SINR of the signal from the base station of equal to or less than the threshold value (required SINR) in the case where the non-regenerative relay is performed.

$\gamma_{RX,min}{}^{UEi}$ may be calculated based on at least one of assumed reception signal power, assumed reception interference power, assumed noise power, and the like of the terminal station UE$_i$. For example, $\gamma_{RX,min}{}^{UEi}$ may be calculated by the following Equations 1 and 2.

[Math. 1]

$$\gamma_{RX,min}^{UE_i} = P_{TX}^{BS} - L_{BS \to UE_i,pre} - P_{IN,max}^{UE_i} \cdots \text{(Equation 1)}$$

$$\text{Note that } P_{IN,max}^{UE_i} = 10 \log_{10}(10^{\frac{P_{TX,max}^{R} - L_{SI}^{R} - D^{UE_i}}{10}} + 10^{\frac{P_N^{UE_i}}{10}}) \cdots \text{(Equation 2)}$$

Here, $P_{TX}{}^{BS}$ is transmission power of a transmission signal to the terminal station UE$_i$ in the base station, $L_{BS \to UEi,pre}$ is an assumed propagation loss (path loss) between the base station and the terminal station UE$_i$, and $P_{IN,max}{}^{UEi}$ is a maximum value of assumed interference noise power caused by a non-regenerative relay signal in the terminal station UE$_i$. Furthermore, $P_{TX,max}{}^{R}$ is a maximum value of transmission power in the relay station, $L_{SI}{}^{R}$ is a propagation loss between a receiving antenna and a transmitting antenna of the relay station, $D^{UEi}$ is a value obtained from a specific spectrum mask of the non-regenerative relay signal, and $P_N{}^{UEi}$ is noise power of the terminal station UE$_i$.

In other words, in Equation 1, $P_{TX}{}^{BS}$-$L_{BS \to UEi,pre}$ relates to the assumed reception signal power of the terminal station UE$_i$, $P_{TX,max}{}^{R}$-$L_{SI}{}^{R}$-$D^{UEi}$ relates to the assumed reception interference power of the terminal station UE$_i$ (in the case of the minimum propagation loss and the maximum relay power), and $P_N{}^{UEi}$ relates to the assumed noise power of the terminal station UE$_i$.

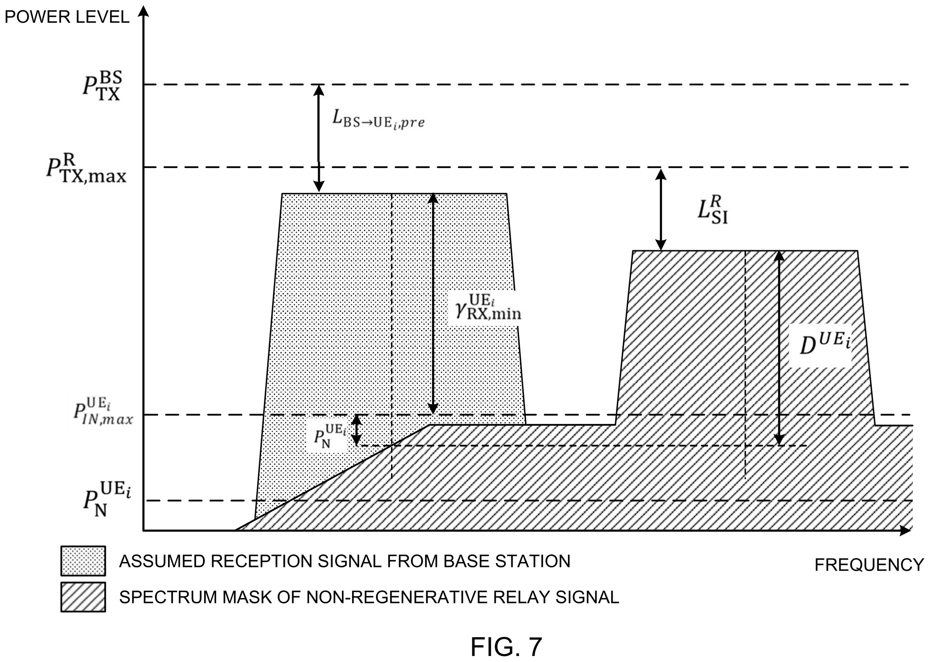

Fig. 7 is a diagram illustrating an example of parameters for calculating $\gamma_{RX,min}{}^{UEi}$. An assumed reception signal from the base station and a spectrum mask of a non-regenerative relay signal of the relay station in the terminal station UE$_i$ are illustrated. It is found that $\gamma_{PX,min}{}^{UEi}$ can be derived from Equations 1 and 2.

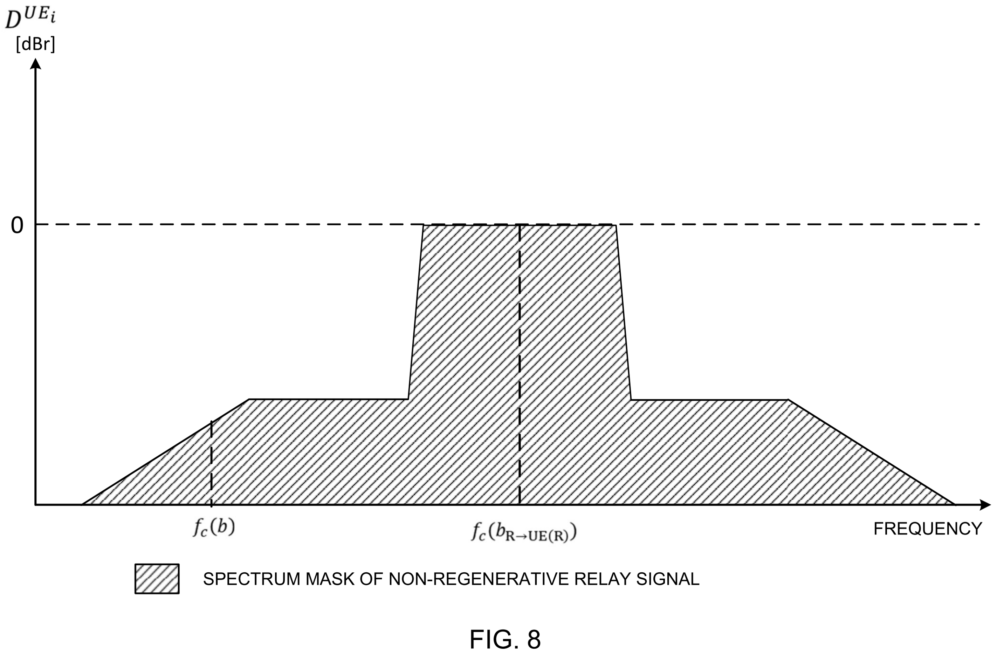

Fig. 8 is a diagram illustrating an example of a value of $D^{UEi}$. The value of the transmission spectrum mask of the non-regenerative relay signal varies depending on the frequency. This is because the power of the non-regenerative relay signal becomes weaker as the non-regenerative relay signal is further separated from the frequency resource used for the non-regenerative relay. $D^{UEi}$ may indicate how much the power of the non-regenerative relay signal becomes weaker depending on the frequency.

When a frequency difference between a certain resource block b and a resource block $b_{R \to UE(R)}$ used for the non-regenerative relay is assumed to be $\Delta f(b, b_{R \to UE(R)})$, $\Delta f(b, b_{R \to UE(R)}) = f_c(b) - f_c(b_{R \to UE(R)})$ may be obtained. Here, $f_c(b)$ is the center frequency of the resource block b, and $f_c(b_{R \to UE(R)})$ is the center frequency of the resource block $b_{R \to UE(R)}$.

Fig. 8 illustrates $D^{UEi} = D^{UEi}(\Delta f(b, b_{R \to UE(R)}))$, and $D^{UEi}(\Delta f(B_{R \to UE(R)}, b_{R \to UE(R)})) = D^{UEi}(0) = 0$.

Note that the control apparatus may know values of $P_{TX}{}^{BS}$, $L_{BS \to UEi,pre}$, and $P_{TX,max}{}^{R}$ in advance (may store the values in advance). The control apparatus may determine $P_{TX}{}^{BS}$ based on a report from the base station (for example, $P_{TX}{}^{BS}$ may be determined to be a reported value or a value indicated by the reported information). The control apparatus may determine $L_{SI}{}^{R}/P_{TX,max}{}^{BS}$ based on a report from the relay station (for example, $L_{SI}{}^{R}/P_{TX,max}{}^{BS}$ may be determined to a reported value or a value indicated by the reported information). $L_{BS \to UEi,pre}$ may be derived from a past measurement result (specifically, $L_{BS \to UEi}$ which will be described later) in the base station/terminal station.

For $D^{UEi}$, the control apparatus may determine that the above-described specific spectrum mask is a representative spectrum mask, or may determine the $D^{UEi}$ based on a report of a measurement result from the terminal station UE$_i$. For $P_N{}^{UEi}$, the control apparatus may determine that $P_N{}^{UEi}$ is a representative (or specific) noise power, or may determine $P_N^{UEi}$ based on a report of a measurement result from the terminal station $UE_i$. The representative spectral mask or power may be determined in advance in the standard (which may be a required spectrum mask or a required power value of the standard, for example). Note that $P_{IN}^{UEi}$ may be the same (for example, $P_{IN}^{UE0} = P_{IN}^{UE1}$) for a plurality of terminal stations $UE_i$, or may be different for each terminal station.

In Step S102, the control apparatus provides, to the relay station, an instruction to perform non-regenerative relay by semi-fixed slot allocation in communication with a specific terminal station (terminal station 40a; which may be referred to as a UE(R)). The instruction may include information (setting information) regarding at least one of a frequency resource (a subcarrier, a resource block, and the like), a time resource (for example, a timing, a period, an offset with reference to a certain time, and the like), a power resource (for example, a relay power value that is an absolute value or a relative value with reference to certain power), and the like to be used.

In Step S103, the relay station that has received the instruction in Step S102 performs relay communication by non-regenerative relay in regard to the above-described specific terminal station.

Note that the relay station may be notified of information related to the terminal station $UE_i$ which has been specified as having a concern of interference in Step S101 by the base station (/control apparatus) (via a control line, for example). The information may include information (for example, a UE identifier, a radio network temporary identifier (RNTI)) for specifying the terminal station $UE_i$, or may include information for providing an instruction to measure a propagation loss of $UE_i$. For example, in a case where the relay station is notified of the information for providing an instruction to quantify the propagation loss of $UE_i$ by the base station (/control apparatus), the relay station may quantify (measure) $L_{UEi \rightarrow R}$, which is the propagation loss between the terminal station $UE_i$ and the relay station, and provides a report thereof to the base station (/control apparatus).

In Step S104, the control apparatus calculates $\gamma_{RX}^{,UEi}$ which is assumed reception SINR in the terminal station $UE_i$ that receives (or may receive) the signal from the base station at the same timing as the non-regenerative relay from the relay station. Note that the terminal station $UE_i$ is different from the above-described specific terminal station that is a direct target of the non-regenerative relay.

$\gamma_{RX}^{UEi}$ may be calculated based on at least one of assumed reception signal power, assumed reception interference power, assumed noise power, and the like of the terminal station $UE_i$. For example, $\gamma_{RX}^{UEi}$ may be calculated based on Equations 3 to 6 below.

[Math. 2]

$$\gamma_{RX}^{UE_i} = P_{TX}^{BS} - L_{BS \rightarrow UE_i} - P_{IN}^{UE_i} \dots \text{(Equation 3)}$$

$$\text{Note that } P_{IN}^{UE_i} = 10 \log_{10}(10^{\frac{P_{TX}^{R} - L_{R \rightarrow UE_i} - \gamma_{TX}^{R}}{10}} + 10^{\frac{P_N^{UE_i}}{10}}) \dots \text{(Equation 4)}$$

$$\gamma_{TX}^{R} = \gamma_{RX}^{R} - NF_{TX}^{R} \dots \text{(Equation 5)}$$

$$\gamma_{RX}^{R} = P_{TX}^{BS} - L_{BS \rightarrow R} - P_N^{R} \dots \text{(Equation 6)}$$

Here, $L_{BS \rightarrow UEi}$ is a propagation loss between the base station and the terminal station $UE_i$, and $P_{IN}^{UEi}$ is assumed interference noise power caused by the non-regenerative relay signal at the terminal station $UE_i$. Furthermore, $P_{TX}^{R}$ is transmission power at the relay station, $L_{R \rightarrow UEi}$ is a propagation loss between the relay station and the terminal station $UE_i$, and $\gamma_{TX}^{R}$ is a SINR of a transmission signal from the relay station to the terminal station $UE_i$. Furthermore, $\gamma_{RX}^{R}$ is an SINR of a reception signal from the base station at the relay station, and $NF_{TX}^{R}$ is a noise figure (NF) of the relay station. The noise figure may correspond to a ratio of an output SNR to an input signal-to-noise power ratio (signal-to-noise ratio (SNR)) (= input SNR/output SNR). In addition, $L_{BS \rightarrow R}$ is a propagation loss between the base station and the relay station, and $P_N^{R}$ is noise power at the relay station.

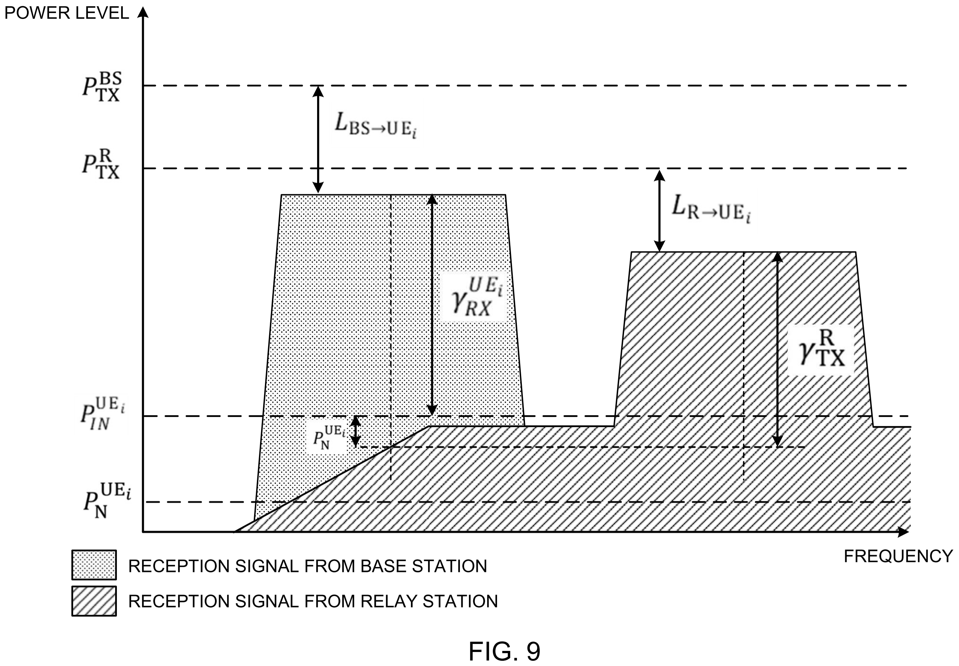

Fig. 9 is a diagram illustrating an example of parameters for calculating $\gamma_{RX}^{UEi}$. A (direct) reception signal from the base station and a reception signal of a signal subjected to non-regenerative relay from the relay station to the above-described specific terminal station in the terminal station $UE_i$ are illustrated. It is possible to ascertain that $\gamma_{RX}^{UEi}$ can be derived from Equations 3 to 6.

The base station may measure the propagation loss $L_{R \rightarrow BS}$ from the relay station to the base station based on a reference signal (RS) transmitted from the relay station. The base station may measure the propagation loss $L_{UEi \rightarrow BS}$ from the relay station to the base station based on the reference signal transmitted from the terminal station $UE_i$. The base station may notify the control apparatus of information regarding these measurement results.

The relay station may measure the propagation loss $L_{UEi \rightarrow R}$ from the terminal station $UE_i$ to the relay station based on the reference signal transmitted from the terminal station $UE_i$. The relay station may notify the control apparatus of the information regarding the measurement result via the base station or without intervention thereof.

In a case where TDM is used, it may be assumed that $L_{BS \to R} = L_{R \to BS}$, $L_{BS \to UEi} = L_{UEi \to BS}$, and $L_{R \to UEi} = L_{UEi \to R}$. In this case, the control apparatus may derive $L_{BS \to R}$, $L_{BS \to UEi}$, and $L_{R \to UEi}$ used in Equations 3 to 6 based on the information regarding $L_{R \to BS}$, $L_{UEi \to BS}$, and $L_{UEi \to R}$ provided as a notification from the base station/relay station.

Note that the control apparatus may notify the relay station/terminal station $UE_i$ of RS setting information via the base station. The RS setting information may include information such as information of RBs to be measured and RS transmission timing (for example, a period and a time offset from a certain timing).

Furthermore, the RS setting information provided as a notification to the terminal station $UE_i$ may also be provided as a notification to the relay station. In this case, the relay station can appropriately receive the RS transmitted from the terminal station $UE_i$.

Note that the control apparatus may determine $P_{TX}^R$ based on a report from the relay station (for example, $P_{TX}^R$ may be determined to be a reported value or a value indicated by reported information). The control apparatus may determine that $P_N^R$ and $NF_{TX}^R$ are representative values (or specific values), respectively. The representative values may be determined in advance in the standard (which may be required values of the standard, for example). The control apparatus may determine $P_N^R$ based on a report of a measurement result from the terminal station $UE_i$.

In Step S104, the control apparatus calculates $\gamma_{DESIRED}^{UEi}$, which is a desired SINR of the reception signal from the base station in the terminal station $UE_i$. For example, the control apparatus may calculate $\gamma_{DESIRED}^{UEi}$ based on a modulation and coding scheme (MCS) used by the base station for communication with the terminal station $UE_i$. The control apparatus may be notified of the information regarding the MCS by the base station. The information regarding the MCS may be an MCS (or an MCS index) provided as an instruction to the terminal station $UE_i$ using DCI for the PDSCH.

In Step S105, the control apparatus may determine whether or not to stop the non-regenerative relay of the relay station to the above-described specific terminal station based on $\gamma_{RX,}^{UEi}$ and $\gamma_{DESIRED}^{UEi}$ calculated in Step S104. For example, the control apparatus may determine to stop the non-regenerative relay of the relay station in a case where a stop condition (for example, $\gamma_{RX,}^{UEi} \leq \gamma_{DESIRED}^{UEi} + M_0^{UEi}$) is satisfied. Here, $M_0^{UEi}$ may be a margin (first margin) for the stop condition for the terminal station $UE_i$, and may correspond to at least one of a positive value, 0, and a negative value. Note that in the present disclosure, the margin may be interchangeably read with an offset, a shift, and the like.

In a case where it is determined to stop the non-regenerative relay of the relay station (Step S105-Yes), the control apparatus may notify the relay station/terminal station $UE_i$ of the stop of the non-regenerative relay to the above-described terminal station in Step S106. The relay station may stop the corresponding non-regenerative relay in response to the notification of the stop of the non-regenerative relay.

In Step S107, the control apparatus calculates $\gamma_{RX,}^{UEi}$ which is an assumed reception SINR in the terminal station $UE_i$ on the assumption that the relay station, the non-regenerative relay of which has been stopped in Step S106, performs non-regenerative relay. Also, the control apparatus calculates $\gamma_{DESIRED}^{UEi}$, which is a desired SINR of the reception signal from the base station in the terminal station $UE_i$. The calculation may be performed similarly to Step S104.

In Step S108, the control apparatus may determine whether or not to resume the non-regenerative relay of the relay station to the above-described specific terminal station based on $\gamma_{RX,}^{UEi}$ and $\gamma_{DESIRED}^{UEi}$ calculated in Step S107. For example, the control apparatus may determine to resume the non-regenerative relay of the relay station in a case where a resuming condition (for example, $\gamma_{RX,}^{UEi} \geq \gamma_{DESIRED}^{UEi} + M_1^{UEi}$) is satisfied. Here, $M_1^{UEi}$ may be a margin (first margin) for the resuming condition for the terminal station $UE_i$, and may correspond to at least one of a positive value, 0, and a negative value. Note that the $M_1^{UEi}$ may be larger than, the same as, or smaller than the $M_0^{UEi}$.

$M_0^{UEi}$, $M_1^{UEi}$, and the like may be determined based on at least one of priority/traffic volume of communication with respect to the above-described specific terminal station, the location of the above-described specific terminal station, priority/traffic volume of communication with respect to the terminal station $UE_i$, the location of the terminal station $UE_i$, and the like. For example, the magnitude relationship between $M_0^{UEi}$ and $M_1^{UEi}$ may be determined based on at least one of these.

In a case where it is determined to resume the non-regenerative relay of the relay station (Step S108-Yes), the control apparatus may notify the relay station/terminal station $UE_i$ of the resuming of the non-regenerative relay to the above-described specific terminal station. The relay station may resume the corresponding non-regenerative relay in response to the notification of the resuming of the non-regenerative relay (return to Step S103).

Note that the relay station 30 may stop the non-regenerative relay in a case where there is an instruction to stop the non-regenerative relay from the base station 20/control apparatus 10 separately from the above-described flow or in a case where a specific period of time elapses from the start of the non-regenerative relay or from a specific timing.

In the present disclosure, the stop condition may be referred to as a first condition, and the resuming condition may be referred to as a second condition. Note that the stop condition/resuming condition may be determined in advance in the standard, may be provided as a notification from another apparatus (for example a base station or a node of NF), or may be determined based on capability of itself.

According to the first control flow described above, the control apparatus can suitably control stop/resuming of the non-regenerative relay in consideration of interference in another terminal station caused by the non-regenerative relay to a certain terminal station.

(Second Control Flow)

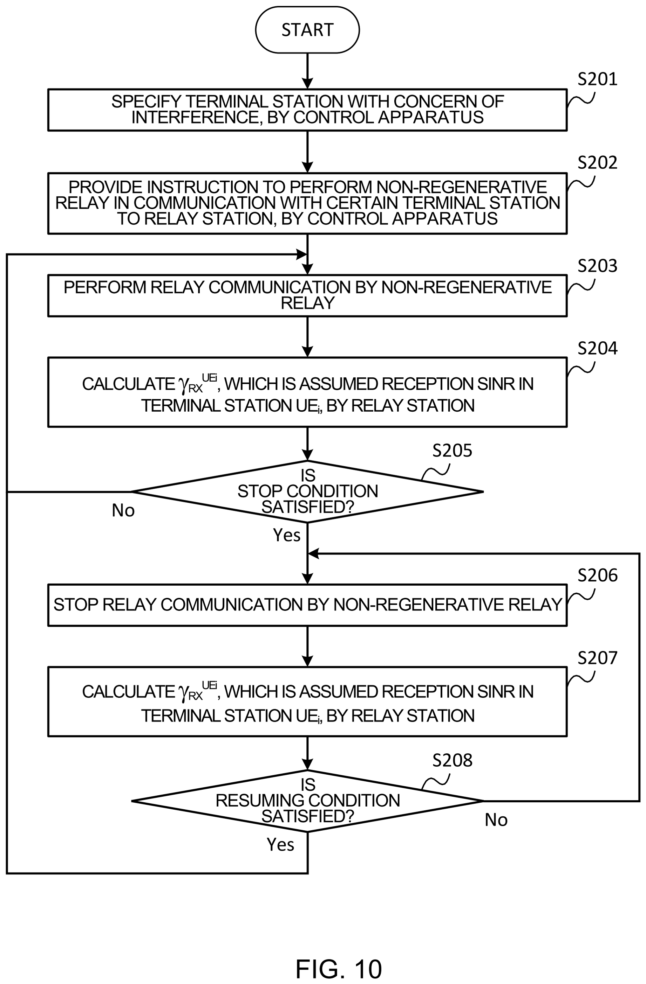

Fig. 10 is a diagram illustrating an example of a second control flow according to an embodiment of the present disclosure. The second control flow is different from the first control flow in that the relay station itself determines stop/resuming of the non-regenerative relay. Hereinafter, steps that may be similar to those in the first control flow will not be described repeatedly. For example, Steps S201 to S203 may be the same as Steps S101 to S103, respectively.

In Step S204, the relay station calculates $\gamma_{RX,}^{UEi}$ which is an assumed reception SINR in the terminal station $UE_i$. For example, $\gamma_{RX}^{UEi}$ may be calculated based on Equations 3 to 6 below described above. Acquisition of information to be used for calculation of $\gamma_{RX}^{UEi}$ will be described below.

The control apparatus may notify the relay station of $P_{TX}^{BS}$, derived $L_{BS \to R}$ and $L_{BS \to UEi}$, calculated $\gamma_{DESIRED}^{UEi}$, and the like. Note that it is not necessary to notify the relay station of all of them, and for example, a part of the information may be stored in the relay station in advance.

The base station may measure the propagation loss $L_{R \to BS}$ from the relay station to the base station based on a reference signal transmitted from the relay station. The base station may measure the propagation loss $L_{UE \to BS}$ from the relay station to the base station based on a reference signal transmitted from the terminal station $UE_i$. The base station may notify the control apparatus of information regarding these measurement results.

Note that $\gamma_{RX}^{R}$ may be calculated based on Expression 6, or may be measured based on a notification signal/reference signal from the control apparatus (base station).

The relay station may determine that $P_N^{UEi}$, $P_N^R$, $NF_{TX}^R$, and the like are representative values (or specific values), respectively. The representative values may be determined in advance in the standard (which may be required values of the standard, for example). The control apparatus may determine $P_N^R$ based on a report of a measurement result from the terminal station $UE_i$.

The relay station may assume that $L_{R \to UEi} = L_{UEi \to R}$ and derive $L_{R \to UEi}$ from measured $L_{UEi \to R}$.

The relay station calculates $\gamma_{RX,}^{UEi}$ based on the values provided as notifications from the control apparatus described above, the representative values, the values measured/derived by the relay station itself, and the like.

In Step S205, the relay station may determine whether or not to stop the non-regenerative relay to the above-described specific terminal station based on $\gamma_{RX,}^{UEi}$ and $\gamma_{DESIRED}^{UEi}$ calculated in Step S204. For example, the relay station may determine to stop the non-regenerative relay of the relay station in a case where $\gamma_{RX,}^{UEi} \le \gamma_{DESIRED}^{UEi} + M_0^{UEi}$, which is a stop condition, is satisfied. The $M_0^{UEi}$ may be provided as a notification from the control apparatus or may be stored in advance in the relay station.

In a case where it is determined to stop the non-regenerative relay of the relay station (Step S205-Yes), the relay station stops the non-regenerative relay to the above-described specific terminal station in Step S206. The relay station may notify the control apparatus/terminal station $UE_i$ of the stop of the non-regenerative relay to the above-described specific terminal station. The control apparatus may update/control frequency resource allocation related to the non-regenerative relay to the above-described relay station based on the notification of the stop of the non-regenerative relay. For example, the control apparatus may change a frequency resource to be used for the non-regenerative relay of the relay station to a frequency resource that is expected to reduce interference with the terminal station $UE_i$, and return to Step S102 to transmit, to the relay station, an instruction to perform non-regenerative relay using the frequency resource changed in communication with the specific terminal station.

In Step S207, the relay station calculates $\gamma_{RX,}^{UEi}$ which is an assumed reception SINR in the terminal station $UE_i$ on the assumption that the relay station itself performs the non-regenerative relay. Also, the relay station calculates $\gamma_{DESIRED}^{UEi}$, which is a desired SINR of the reception signal from the base station in the terminal station $UE_i$. The calculation may be performed similarly to Step S204.

In Step S208, the relay station may determine whether or not to resume the non-regenerative relay of the relay station itself to the above-described specific terminal station based on $\gamma_{RX,}^{UEi}$ and $\gamma_{DESIRED}^{UEi}$ calculated in Step S207. For example, the relay station may determine to resume the non-regenerative relay in a case where $\gamma_{RX,}^{UEi} \ge \gamma_{DESIRED}^{UEi} + M_1^{UEi}$, which is a resuming condition, is satisfied. The $M_1^{UEi}$ may be provided as a notification from the control apparatus or may be stored in advance in the relay station.

In a case where it is determined to resume the non-regenerative relay (Step S208-Yes), the relay station may resume the non-regenerative relay (return to Step S203). Also, the relay station may notify the control apparatus/terminal station $UE_i$ of the resuming of the non-regenerative relay to the above-described specific terminal station.

According to the second control flow described above, the relay station can suitably control stop/resuming of the non-regenerative relay in consideration of interference in another terminal station caused by the non-regenerative relay to a certain terminal station.

(Third Control Flow)

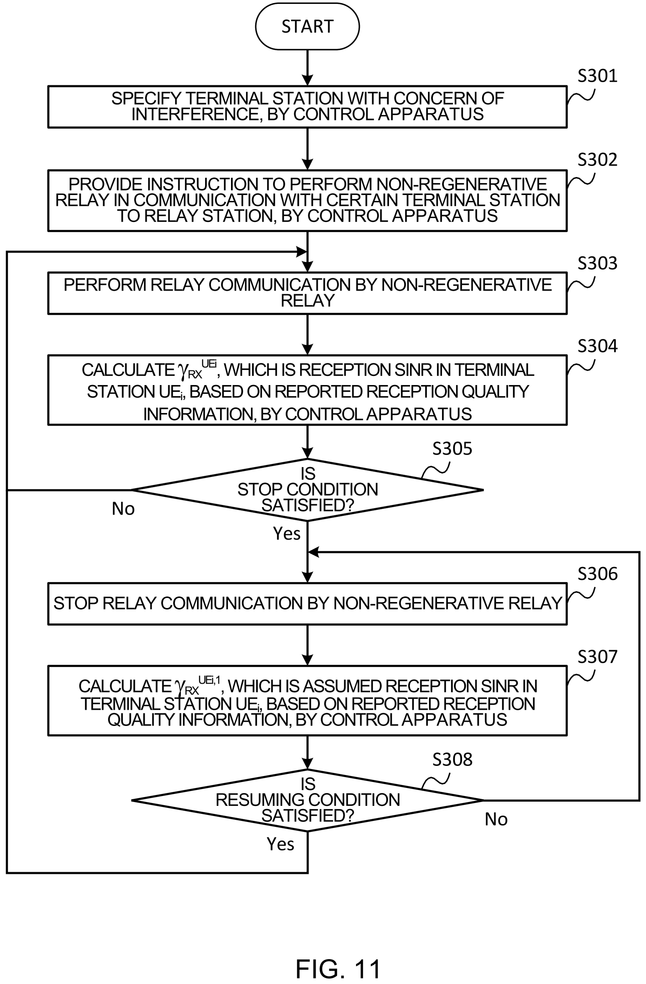

Fig. 11 is a diagram illustrating an example of a third control flow according to an embodiment of the present disclosure. The third control flow is different from the first and second control flows in that the stop/resuming of the non-regenerative relay is determined based on reception quality information from the terminal station. Hereinafter, steps that may be similar to those in the first control flow will not be described repeatedly. For example, Steps S301 to S303, S305, and S306 may be the same as Steps S101 to S103, S105, and S106, respectively.

Note that a configuration may be adopted in which the processing related to the control apparatus in Fig. 11 is replaced with processing related to the relay station based on the second control flow and the relay station determines the stop/resuming of the non-regenerative relay based on reception quality information from the terminal station.

In Step S304, the control apparatus calculates $\gamma_{RX,}^{UEi}$, which is a reception SINR in the terminal station $UE_i$, based on the reception quality information reported from the terminal station $UE_i$.

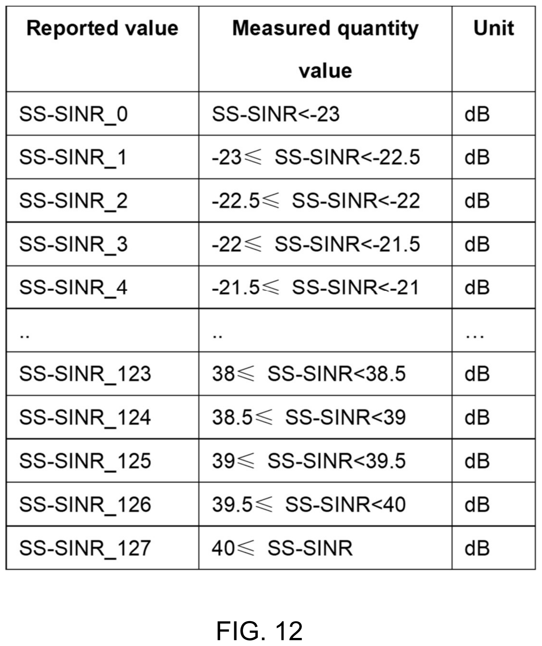

For example, in a case where the reception quality information is SS-SINR/CSI-SINR, a value reported as SS-SINR/CSI-SINR may be an integer value of equal to or greater than 0 and equal to or less than 127. In addition, the base station may specify the measured quality based on the SS-SINR measurement report mapping illustrated in Fig. 12 (same as Table 10.1.16.1-1 in 3GPP TS 38.133). In a case where SS-SINR = 0 is reported, for example, the base station may determine that measured SINR (= $\gamma_{RX,}^{UEi}$) is less than -23 dB.

Note that $\gamma_{RX,}^{UEi}$ = (reported value/2) - 23 [dB] may be obtained. In a case where SS - SINR = 0 is reported, for example, the base station may determine that measured SINR (= $\gamma_{RX,}^{UEi}$) = -23 dB.

Note that the above-described numbers such as "127" and "-23" may be read as different numbers.

Note that the above-described reception quality information may include at least one of reception power (for example, reference signal received power (RSRP)), reception quality (for example, reference signal received quality (RSRQ), SINR, SNR), signal strength (for example, received signal strength indicator (RSSI)), a channel state information (CSI) reference signal, a link quality indicator (LQI)) and the like.

In Step S304, the control apparatus calculates $\gamma_{DESIRED}^{UEi}$, which is a desired SINR of the reception signal from the base station in the terminal station $UE_i$, similarly to Step S104.

In Step S307, the control apparatus calculates $\gamma_{RX,}^{UEi,1}$ which is an assumed reception SINR in the terminal station $UE_i$ on the assumption that the relay station, the non-regenerative relay of which has been stopped in Step S306, performs non-regenerative relay. $\gamma_{RX}^{UEi,1}$ may be calculated based on at least one of assumed reception signal power, assumed reception interference power, assumed noise power, and the like of the terminal station $UE_i$. For example, $\gamma_{RX}^{UEi,1}$ may be calculated based on Equations 7 and 8 below.

[Math. 3]

$$\gamma_{\mathrm{RX}}^{\mathrm{UE}_i,1} = P_{\mathrm{N}}^{\mathrm{UE}_i} + \gamma_{\mathrm{RX}}^{\mathrm{UE}_i,0} - 10\log_{10}(10^{\frac{P_{\mathrm{N}}^{\mathrm{UE}_i}}{10}} + 10^{\frac{I^{\mathrm{R}\to\mathrm{UE}_i}}{10}})\ldots(\text{Equation 7})$$

$$\text{Note that } I^{\mathrm{R}\to\mathrm{UE}_i} = 10\log_{10}(10^{\frac{P_{\mathrm{N}}^{\mathrm{UE}_i}+\gamma_{\mathrm{RX}}^{\mathrm{UE}_i,0}-\gamma_{\mathrm{RX}}^{\mathrm{UE}_i}}{10}} - 10^{\frac{P_{\mathrm{N}}^{\mathrm{UE}_i}}{10}})\ldots(\text{Equation 8})$$

Here, $\gamma_{RX}^{UEi,0}$ is a reception SINR in the terminal station $UE_i$ at the timing at which the non-regenerative relay is not used (or the non-regenerative relay is not performed). In Step S307, the control apparatus may calculate $\gamma_{RX,}^{UEi,0}$, which is a reception SINR in the terminal station $UE_i$, based on the reception quality information reported from the terminal station $UE_i$, similarly to Step S304. Note that the measurement timings of $\gamma_{RX}^{UEi,0}$ in Equation 7 and $\gamma_{RX}^{UEi,0}$ in Equation 8 may be the same or different. For example, $\gamma_{RX}^{UEi,0}$ in Equation 8 may be calculated based on the reception quality information reported from the terminal station $UE_i$ immediately after the non-regenerative relay is stopped in Step S306 (or at the beginning). Also, $\gamma_{RX}^{UEi,0}$ in Equation 7 may be calculated based on the reception quality information reported later than the reception quality information described above in regard to Equation 8. On the other hand, $\gamma_{RX,}^{UEi}$ may be a value calculated in Step S304. $I^{R\to UEi}$ is assumed reception interference power (interference quantity) given to the terminal station $UE_i$ by the non-regenerative relay of the relay station.

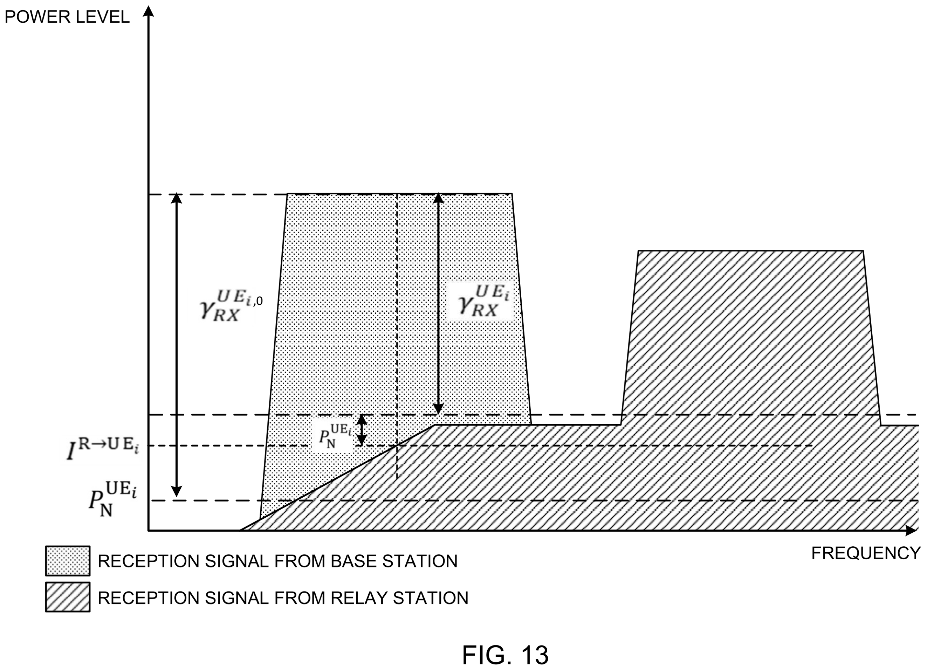

Fig. 13 is a diagram illustrating an example of parameters for calculating $I^{R\to UEi}$. A (direct) reception signal from the base station and a reception signal of a signal subjected to non-regenerative relay from the relay station to the above-described specific terminal station in the terminal station $UE_i$ are illustrated. Note that at the time of measurement of $\gamma_{RX}^{UEi,0}$, there is no reception signal of a signal subjected to the non-regenerative relay from the relay station to the above-described specific terminal station. It is possible to ascertain that $I^{R\to UEi}$ can be derived from Equation 8.

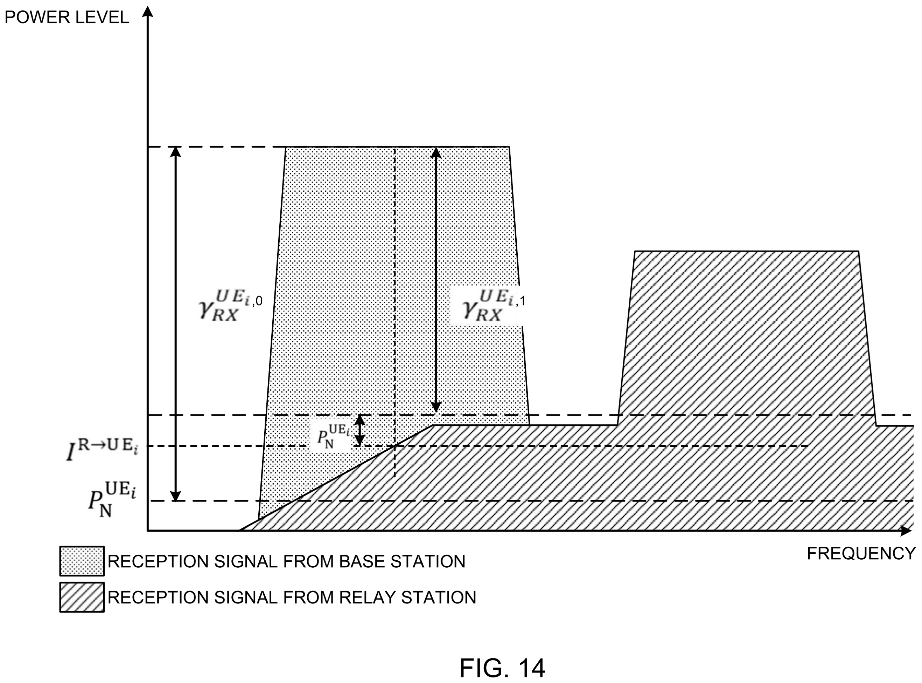

Fig. 14 is a diagram illustrating an example of parameters for calculating $\gamma_{RX}^{UEi,1}$. A (direct) reception signal from the base station and a reception signal of a signal subjected to non-regenerative relay from the relay station to the above-described specific terminal station in the terminal station $UE_i$ are illustrated. It is possible to ascertain that $\gamma_{RX}^{UEi,1}$ can be derived from Equations 7 and 8.

Also, the control apparatus calculates $\gamma_{DESIRED}^{UEi}$, which is a desired SINR of the reception signal from the base station in the terminal station $UE_i$. The calculation may be performed similarly to Step S304.

In Step S308, the control apparatus may determine whether or not to resume the non-regenerative relay of the relay station to the above-described specific terminal station based on $\gamma_{RX,}{}^{UEi,1}$ and $\gamma_{DESIRED}{}^{UEi}$ calculated in Step S307. For example, the control apparatus may determine to resume the non-regenerative relay of the relay station in a case where $\gamma_{RX,}{}^{UEi,1} \geq \gamma_{DESIRED}{}^{UEi} + M_1{}^{UEi}$, which is a resuming condition, is satisfied.

In a case where it is determined to resume the non-regenerative relay of the relay station (Step S308-Yes), the control apparatus may notify the relay station/terminal station $UE_i$ of the resuming of the non-regenerative relay to the above-described specific terminal station. The relay station may resume the corresponding non-regenerative relay in response to the notification of the resuming of the non-regenerative relay (return to Step S303).

According to the third control flow described above, the control apparatus can suitably control stop/resuming of the non-regenerative relay in consideration of interference in another terminal station caused by the non-regenerative relay to a certain terminal station.

(Variations in Determination of Stop/Resuming)

Assuming that $D_{UEi}{}^R(n) \in \{0, 1\}$ (for example, 0 = stop, 1 = resume) is an n-th (n is an integer) determination result related to stop/resuming of the non-regenerative relay in the relay station as described in Steps S105 and S108, there are variations of the determination as follows: (1) to apply (use) the result obtained every time as it is, (2) moving average, (3) switch and stay, and (4) to actually apply the result if the number of times of the same determination in a certain period of time becomes equal to or greater than a threshold value.

In the above case (1), $D_{UE}i^R(n) = D_{UEi}{}^R(n)$.

In the above case (2), a moving average is obtained using a moving average window $W_{MA}$ (window length = $L_w$), for example. In this case, $D_{UEi}{}^R(n) = W_{MA}(D_{UE}i^R(n - L_w + 1: n))$ may be satisfied, and $W_{MA}(D_{UEi}{}^R(n - L_w + 1: n))$ may be obtained by Equation 9 below. $D_{UEi}{}^R(n - L_w + 1: n)$ may mean $D_{UEi}{}^R(n - L_w + 1),..., D_{UEi}{}^R(n)$.

[Math. 4]

$$W_{MA}\left(\left\{D_{UE_i}^R(n - L_w + 1),\ldots,D_{UE_i}^R(n)\right\}\right) =$$
$$\begin{cases} 0 & if \quad \frac{1}{L_w}\sum_{i=n-L_w+1}^{n} a_i D_{UE_i}^R(i) \leq 0.5 \\ 1 & else \end{cases} \quad \cdots \text{(Equation 9)}$$

Note that $a_i$ is a weight, and may vary based on an elapsed time from the determination. For example, $a_i$ may be a larger value as i is larger (closer to n). In this case, a more recent determination result can be treated as more important. Note that "0.5" in Equation 9 may be another real number value.

In the case of the above (3), in a case where all $D_{UEi}{}^R(n - L_{ss}: n - 1)$, which are the determination results of the past $L_{ss}$ times, are different from the current determination $D_{UEi}{}^R(n)$, the next determination $D_{UEi}{}^R(n + 1)$ is forcibly made to be the same as the determination results of the past $L_{ss}$ times, as indicated by Equation 10 below. In other words, the stop/resuming of the non-regenerative relay is temporarily switched in the n-th determination, and the state is returned to the previous state in the n + 1-th determination.

[Math. 5]

$$D_{UE}^R(n + 1) \leftarrow \overline{D_{UE}^R}(n) \ldots \text{if} \ \ D_{UE}^R(n - L_{ss}:n - 1) = \overline{D_{UE}^R}(n) \ldots \text{(Equation 10)}$$

Here, $\overline{D_{UE}^R}(n)$ means " $\text{NOT} \ D_{UE}^R(n)$ " (or bit inversion of $D_{UE}^R(n)$ ).

In the case of the above (4), in a case where the same determination result (determination that changes from the current state) occurs the threshold value X times or more within a period of time T, the determination result is actually treated as a valid result, and otherwise, the state of the non-regenerative relay is maintained.

Which one of the above (1) to (4) is to be used, and values such as $L_w$, "other real number values", $L_{ss}$, T, and X may be determined in advance, may be given from another apparatus, or may be determined based on communication quality of a mobile station or the like.

(Variations of Control Flow)

Although a case where transmission is performed only to the terminal station with one relay station and one non-regenerative relay has been illustrated in the above control flows, the application range of the present disclosure is not limited thereto. The above-described first, second, and third control flows can be modified and applied to a case where there are a plurality of relay stations, a case where the non-regenerative relay is transmitted from one relay station to a plurality of terminal stations, and the like.

In a case where there are a plurality of relay stations, for example, $P_{IN,max}^{UEi}$ may be calculated using Equation 11 below instead of Equation 2 in Step S101.

[Math. 6]

$$P_{IN,max}^{UE_i} = 10\,log_{10}\left(\sum_{j=1}^{N_R} 10^{\frac{P_{TX,max}^{R_j} - L_{SI}^{R_j} - D_{UE_i}^{R_j}}{10}} + 10^{\frac{P_N^{UE_i}}{10}}\right)\ldots \text{(Equation 11)}$$

Here, $N_R$ is the number of relay stations that are about to perform the non-regenerative relay, $P_{TX,max}^{Rj}$ is a maximum value of transmission power in the relay station $R_j$, $L_{SI}^{Rj}$ is a propagation loss between a reception antenna and a transmission antenna of the relay station $R_j$, and $D_{UEi}^{Rj}$ is a value obtained from a specific spectrum mask of a non-regenerative relay signal of the relay station $R_j$. $P_{TX,max}^{Rj}$, $L_{SI}^{Rj}$, and $D_{UEi}^{Rj}$ may be acquired/specified similarly to $P_{TX,max}^{R}$, $L_{SI}^{R}$, and $D^{UEi}$ described in the first control flow, respectively.

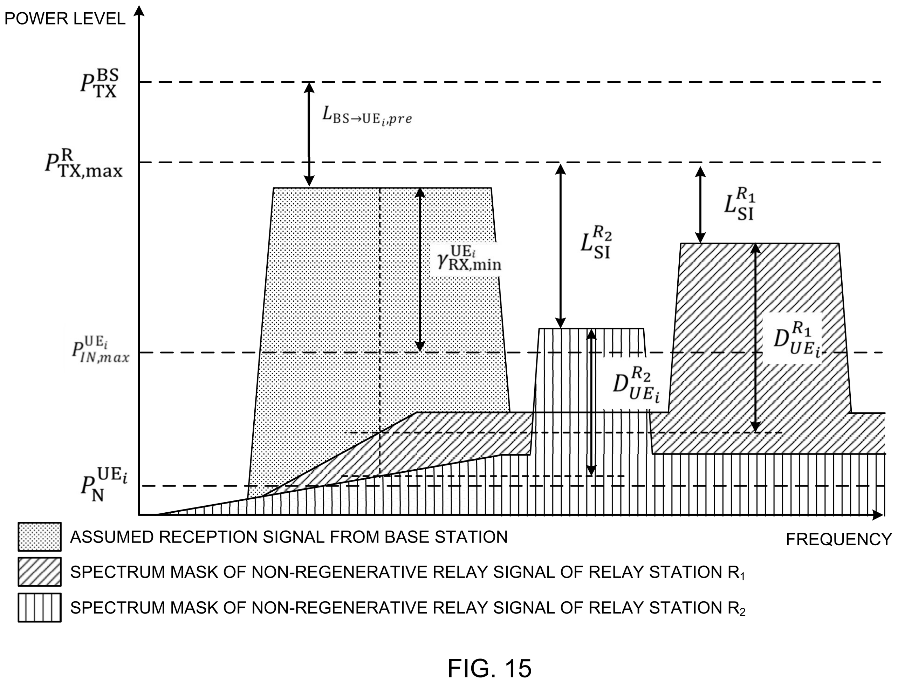

Fig. 15 is a diagram illustrating an example of parameters for calculating $\gamma_{RX,min}^{UEi}$ in a case where relay stations $R_1$ and $R_2$ are about to perform non-regenerative relay. In this example, $P_{TX,max}^{R1} = P_{TX,max}^{R2} = P_{TX,max}^{R}$ are assumed. It is possible to ascertain that $\gamma_{RX,min}^{UEi}$ can be derived from Equations 1 and 11.

Note that a plurality of relay stations may perform the non-regenerative relay for the same terminal station. For example, a plurality of relay stations may use the same frequency to perform the non-regenerative relay for the same terminal station.

In a case where there are a plurality of relay stations, the relay station in Step S102 and the subsequent steps may be read as the plurality of relay stations. For example, in Steps S102 and S103, the control apparatus provides an instruction for the non-regenerative relay to the plurality of relay stations, and the plurality of relay stations perform the non-regenerative relay.

In a case where there are a plurality of relay stations, $P_{IN}^{UEi}$ may be calculated using Equations 12 to 14 instead of Equations 4 to 6 in Steps S104 and S107.

[Math. 7]

$$P_{IN}^{UE_i} = 10\,log_{10}\left(\sum_{j=1}^{N_R} 10^{\frac{P_{TX}^{R_j} - L_{R_j \to UE} - \gamma_{TX}^{R_j}}{10}} + 10^{\frac{P_N^{UE_i}}{10}}\right)\ldots \text{(Equation 12)}$$

$$\gamma_{TX}^{R_j} = \gamma_{RX}^{R_j} - NF_{TX}^{R_j}\ldots \text{(Equation 13)}$$

$$\gamma_{RX}^{R_j} = P_{TX}^{BS} - L_{BS \to R_j} - P_N^{R_j}\ldots \text{(Equation 14)}$$

Here, $P_{TX}^{Rj}$ represents transmission power at a relay station $R_j$, $L_{Rj \to UEi}$ represents a propagation loss between the relay station $R_j$ and the terminal station $UE_i$, and $\gamma_{TX}^{Rj}$ represents an SINR of a transmission signal from the relay station $R_j$ to the terminal station $UE_i$. Furthermore, $\gamma_{RX}^{Rj}$ is an SINR of a reception signal from the base station at the relay station $R_j$, and $NF_{TX}^{Rj}$ is an NF of the relay station $R_j$. In addition, $L_{BS \to Rj}$ is a propagation loss between the base station and the relay station $R_j$, and $P_N^{Rj}$ is noise power at the relay station $R_j$.

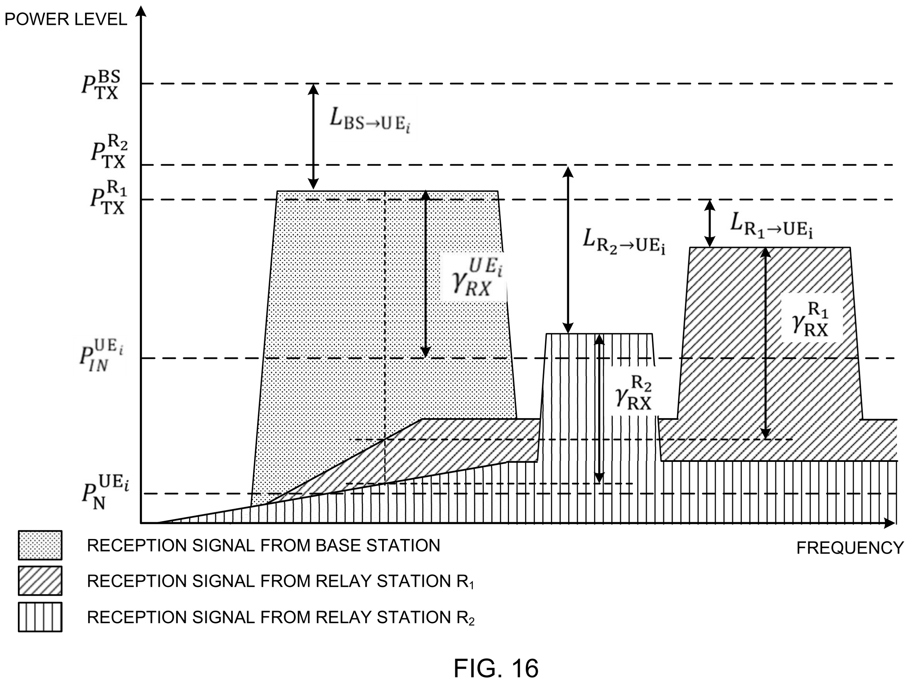

Fig. 16 is a diagram illustrating an example of parameters for calculating $\gamma_{RX}^{UEi}$ in a case where the relay stations $R_1$ and $R_2$ perform the non-regenerative relay. It is possible to ascertain that $\gamma_{RX}^{UEi}$ can be derived from Equations 3, 12 to 14.

Note that in Step S106, Step S108-Yes, or the like, the stop/resuming of the non-regenerative relay may be performed for all the $N_R$ relay stations, or may be performed for only specific relay stations among the $N_R$ relay stations. In the latter case, non-regenerative relay communication other than the specific relay stations can be continued, and communication quality of the terminal station that receives the non-regenerative relay communication can be secured. For example, the targets of the stop of the non-regenerative relay from among the $N_R$ relay stations may be selected in order from the one that more significantly interferes with the terminal station $UE_i$ until a state where the stop condition (for example, $\gamma_{RX,}^{UEi} \leq \gamma_{DESIRED}^{UEi} + M_0^{UEi}$) is not satisfied is achieved (interference of the selected relay station is excluded

from $\gamma_{RX,}^{UEi}$).

It should be noted that a person skilled in the art can naturally understand that, even in a case where the non-regenerative relay is transmitted from one relay station to a plurality of terminal stations, a similar control flow can be realized in consideration of respective transmission signals and the like similarly to the case where there are a plurality of relay stations as described hitherto.

According to the variation of the control flow described hitherto, the control apparatus/relay station can suitably control the stop/resuming of the non-regenerative relay in consideration of interference of another terminal station caused by the non-regenerative relay of the plurality of relay stations/terminal station.

<Supplement>

Although the non-regenerative relay to be stopped/resumed is assumed to be the downlink communication in the present disclosure, the present disclosure is not limited thereto, and only the uplink communication may be stopped/resumed, or both the uplink communication and the downlink communication may be stopped/resumed.

In the present disclosure, a frequency resource of a signal transmitted from the base station 20 to the terminal station 40b and a frequency resource of a non-regenerative relay signal transmitted from the relay station 30 to the terminal station 40a may not overlap or may partially or entirely overlap.

In the present disclosure, the notification of stop/resuming of the non-regenerative relay may be a notification of information explicitly indicating the stop/resuming of the non-regenerative relay or may be a notification of information/-signal implicitly indicating it.

Although an example in which the stop/resuming of the non-regenerative relay of the control flow described above is controlled based on the SINR has been described in the present disclosure, the present disclosure is not limited thereto. The SINR of the control flow described above may be interchangeably read with any one of or a combination of a metric related to arbitrary reception power/reception quality/signal strength, CSI, LQI, and the like.

In the present disclosure, the measurement result (such as an SINR) may correspond to a measurement result in specific layers (for example, Layer 1 and Layer 3). For example, an arbitrary measurement result may be interchangeably read with a measurement result indicated by adding a layer 1 (L1-), a layer 3 (L3-), or the like.

In the present disclosure, the arbitrary measurement result may be interchangeably read with a resource block (RB), a subcarrier, a resource element, a subband, a resource block group, a physical RB (PRB), a common RB (CRB), a virtual RB (VRB), a resource block set, a frequency band, a bandwidth, a frequency bandwidth, a frequency band, a frequency range, a frequency resource, a frequency domain resource, or the like.

The mathematical expressions indicated in the present disclosure may be interchangeably read with mathematical expressions obtained by applying arbitrary values and given arithmetic operations (for example, addition, subtraction, multiplication, and division) to arbitrary coefficients/variables/terms. In addition, the mathematical expressions indicated in the present disclosure may be interchangeably read with mathematical expressions obtained by deleting arbitrary coefficients/variables/terms.

In the present disclosure, the measurement in the base station/relay station/terminal station may be performed based on at least one of a reference signal, a synchronization signal (SS), and a channel. In the present disclosure, a measurement at the base station/relay station/terminal station may be performed (a reference signal/synchronization signal/channel for measurement may also be transmitted) even in a case where the non-regenerative relay is stopped/ended.

As a reference signal, a downlink reference signal (DL-RS), an uplink reference signal (UL-RS), or the like may be used.

The uplink channel may be a physical uplink shared channel (PUSCH), a physical uplink control channel (PUCCH), a physical random access channel (PRACH), or the like.

The downlink channel may be a physical downlink shared channel (PDSCH), a physical downlink control channel (PDCCH), a physical broadcast channel (PBCH), or the like.

The DL-RS may be a channel state information reference signal (CSI-RS) a demodulation reference signal (DMRS), a positioning reference signal (PRS), a phase tracking reference signal (PTRS), a cell-specific reference signal (CRS), or the like.

Note that the CSI-RS may be interchangeably read with a non-zero power (NZP) CSI-RS, an NZP CSI-RS for interference measurement, CSI-interference measurement (IM), zero power (ZP) CSI-RS, and the like.

The UL-RS may be a measurement reference signal (sounding reference signal (SRS)), a demodulation reference signal (DMRS), PRS, PTRS, or the like.

Note that the DMRS may be referred to as a user terminal (UE)-specific reference signal, and a different DMRS may be used for each channel (for example, PUSCH DMRS, PUCCH DMRS, PDSCH DMRS, PDCCH DMRS, PBCH DMRS, or the like may be used.).

The synchronization signal may be, for example, at least one of a primary synchronization signal (PSS) and a secondary synchronization signal (SSS). The signal block including the SS (PSS, SSS) and the PBCH (and the PBCH DMRS) may be referred to as an SS/PBCH block, an SS block (SSB), or the like. Note that the SS, the SSB, and the like may also be referred to as reference signals.

(Concerning Application of Each Embodiment)

At least one of the above-described embodiments may be applied in a case where a specific condition is satisfied. The specific condition may be defined in a standard, or may be provided as a notification by an arbitrary apparatus by using higher layer signaling/physical layer signaling.

In addition, at least one of the above-described embodiments may be applied in a case where arbitrary apparatus is configured/activated/triggered by specific information related to the above-described embodiments (or performing operations of the above-described embodiments) by higher layer signaling/physical layer signaling. For example, the specific information may be information indicating that the stop/resuming control of the non-regenerative relay based on the SINR is activated, arbitrary RRC parameters for a specific release (for example, Rel.18/19), or the like.

<Modifications>

Note that the terms described in the present disclosure and the terms necessary for understanding the present disclosure may be replaced with terms having the same or similar meanings.

In the present disclosure, terms such as an apparatus, a circuit, a device, a section, a unit, and the like can be interchangeably read.

The information, parameters, and the like described in the present disclosure may be represented by using absolute values, may be represented by using relative values with respect to given values, or may be represented by using other corresponding information. For example, the radio resource may be indicated by a given index.

The names used for the parameters and the like in the present disclosure are not limited names in any respect. In addition, mathematical expressions and the like using these parameters may be different from those explicitly disclosed in the present disclosure.

The information, signals, and the like described in the present disclosure may be represented using any of a variety of different techniques. For example, data, orders, commands, information, signals, bits, symbols, chips, and the like that may be mentioned throughout the above description may be represented by voltages, currents, electromagnetic waves, magnetic fields or particles, optical fields or photons, or any combination thereof.

The input/output information, signals, and the like may be saved in a specific location (for example, in a memory) or may be managed using a management table. The input/output information, signals, and the like may be overwritten, updated, or added. The output information, signals, and the like may be deleted. The input information, signals, and the like may be transmitted to other apparatuses.

Arbitrary information described in the present disclosure (for example, information regarding arbitrary parameters/variables) may be provided as a notification between arbitrary apparatuses in the present disclosure. Furthermore, in the present disclosure, a notification of information is not limited to those in the aspects/embodiments described in the present disclosure and may be performed by using other methods.

For example, the notification of information in the present disclosure may be performed by physical layer signaling (for example, downlink control information (DCI) and uplink control information (UCI)), higher layer signaling (for example, radio resource control (RRC) signaling, broadcast information (a master information block (MIB), a system information block (SIB), and the like), and medium access control (MAC) signaling), signaling of a specific interface (an X2 interface, an S1 interface, an NG interface, and the like), other signals/channels (for example, reference signals), or a combination thereof.

Note that the physical layer signaling may be referred to as Layer 1/Layer 2 (L1/L2) control information (L1/L2 control signal), L1 control information (L1 control signal), or the like. Furthermore, the RRC signaling may be referred to as an RRC message, and may be, for example, an RRC connection setup message, an RRC connection reconfiguration message, or the like. Furthermore, the MAC signaling may be provided as a notification by using, for example, a MAC control element (CE).

Furthermore, a notification of given information (for example, a notification of "being X") is not limited to an explicit notification, and may be performed implicitly (for example, by not providing the notification of the given information or by providing a notification of another piece of information).

The software should be construed broadly to mean orders, order sets, codes, code segments, program codes, programs, subprograms, software modules, applications, software applications, software packages, routines, subroutines, objects, executable files, execution threads, procedures, functions, and the like, irrespective of whether it is referred to as software, firmware, middleware, microcode, hardware description language, or other names.

In addition, software, orders, information, and the like may be transmitted and received via a transmission medium. For example, in a case where software is transmitted from a website, a server, or another remote source using at least either a wired technology (a coaxial cable, an optical fiber cable, a twisted pair, a digital subscriber line (DSL), or the like) or a wireless technology (infrared rays, microwaves, or the like), at least either the wired technology or the wireless technology is included within the definition of the transmission medium.

In the present disclosure, terms such as "base station (BS)", "radio base station", "relay station", "fixed station", "NodeB", "eNB (eNodeB)", "gNB (gNodeB)", "access point", "transmission point (TP)", "reception point (RP)", "transmission and reception point (TRP)", "panel", "cell", "sector", "cell group", "carrier", "component carrier" and the like may be used interchangeably.

In the present disclosure, terms such as "mobile station (MS)", "user terminal", "user equipment (UE)", "terminal" and the like may be used interchangeably.

The arbitrary apparatus in the present disclosure may be an Internet-of-things (IoT) apparatus such as a sensor.

The arbitrary apparatus in the present disclosure may be referred to as a transmission apparatus, a reception apparatus, a wireless communication apparatus, or the like. The arbitrary apparatus in the present disclosure may be a device mounted on a moving object that is a movable object, a moving object itself, or the like. The moving object includes, for example, a vehicle, a transport vehicle, an automobile, a motorcycle, a bicycle, a connected car, a excavator, a bulldozer, a wheel loader, a dump truck, a forklift, a train, a bus, a pull car, a human-powered vehicle, a ship and other watercraft, an airplane, a rocket, an artificial satellite, a drone, a multicopter, a quadricopter, a balloon, and objects mounted thereon, and is not limited thereto. Furthermore, the moving object may autonomously travel/be automatically driven.

Each aspect/embodiment described in the present disclosure may be used alone, or may be used in combination, or may be switched and used in accordance with execution. In addition, the orders of the processing procedures, sequences, flowcharts, and the like of each aspect/embodiment described in the present disclosure may be changed as long as there is no contradiction. For example, elements of various steps have been presented using illustrative orders for methods described in the present disclosure, and the present disclosure is not limited to the presented specific orders.

As used in the present disclosure, the phrase "based on" does not mean "based only on" unless explicitly stated otherwise. In other words, the description "based on" means both "based only on" and "at least based on."

Any reference to elements using designations such as "first", "second", and the like as used in the present disclosure does not generally limit the amount or order of those elements. These designations may be used in the present disclosure as a convenient way to distinguish two or more elements. Thus, reference to the first and second elements does not imply that only the two elements may be employed or that the first element must in any way precede the second element.

The terms "connected", "coupled", or any variation thereof, as used in the present disclosure, mean any direct or indirect connection or coupling among two or more elements, and can include presence of one or more intermediate elements between the two elements "connected" or "coupled" to each other. The coupling or connection between elements may be physical, logical, or a combination thereof. The coupling or connection between elements may be a connection via at least either wired or wireless intervention.

In the present disclosure, the term "A and B are different" may mean "A and B are different from each other". Note that the term may mean that "A and B are different from C". Terms such as "separated", "coupled" and the like may also be interpreted in the same manner as "different".

In a case where the terms "include," "including," and variations thereof are used in the present disclosure, these terms are intended to be inclusive in a manner similar to the term "comprising." Furthermore, the term "or" used in the present disclosure is intended not to be an exclusive OR.

In a case where articles such as a, an, and the in English are added by translation, for example, in the present disclosure, the present disclosure may include cases where nouns following these articles are in a plural form.

In the present disclosure, words related to "decision", "determination", "judgement", "selection", "calculation", "computation", "processing", "derivation", "search", "confirmation", "assumption", "expectation", and the like may be read interchangeably with each other.

In the present disclosure, "equal to or less than", "less than", "equal to or greater than", "greater than", "equal to", or the like may be read interchangeably with each other. In addition, in the present disclosure, words meaning "good", "bad", "large", "small", "high", "low", "early", "late", "wide", "narrow", and the like may be read interchangeably with each other irrespective of positive degrees, comparatives, superlatives. In addition, in the present disclosure, words meaning "good", "bad", "large", "small", "high", "low", "early", "late", "wide", "narrow", and the like may be read interchangeably with each other irrespective of positive degrees, comparatives, superlatives as expressions with "i-th" (i is an arbitrary integer) (For example, "the best" may be mutually interchangeable with "the i-th best").

In the present disclosure, "of", "for", "regarding", "related to", "associated with", and the like may be read interchangeably with each other.

Although the invention according to the present disclosure has been described in detail above, it is apparent to those skilled in the art that the invention according to the present disclosure is not limited to the embodiments described in the present disclosure. The description of the present disclosure is for the purpose of illustration and does not impose any restrictive meaning on the invention according to the present disclosure.

<Supplementary Notes>

The following invention is appended to an embodiment of the present disclosure.

[Supplementary Note 1]

A control apparatus including:

a control unit that specifies a second terminal station with a concern of interference with non-regenerative relay between a base station and a first terminal station via a relay station; and
a communication unit that notifies the relay station of a stop of the non-regenerative relay in a case where a first condition related to a reception signal-to-interference plus noise ratio (SINR) of a signal received by the second terminal station from the base station is satisfied at a timing at which the non-regenerative relay is performed.

[Supplementary Note 2]

The control apparatus according to Supplementary Note 1, in which the control unit specifies the second terminal station based on an assumed worst value of the reception SINR at the timing at which the non-regenerative relay is performed.

[Supplementary Note 3]

The control apparatus according to Supplementary Note 2, in which the control unit calculates the worst value of the reception SINR based on a maximum value of assumed interference noise power due to the non-regenerative relay in the second terminal station.

[Supplementary Note 4]

The control apparatus according to any one of Supplementary Notes 1 to 3, in which the first condition is based on the assumed reception SINR at the timing at which the non-regenerative relay is performed, a desired SINR, and a first margin.

[Supplementary Note 5]

The control apparatus according to Supplementary Note 4, in which the communication unit notifies the relay station of a restart of the non-regenerative relay in a case where the non-regenerative relay is stopped and a second condition related to the assumed reception SINR on an assumption that the non-regenerative relay is performed is satisfied.

[Supplementary Note 6]

The control apparatus according to Supplementary Note 5, in which the second condition is based on the assumed reception SINR on the assumption that the non-regenerative relay is performed, a desired SINR, and a second margin.

[Supplementary Note 7]

The control apparatus according to any one of Supplementary Notes 4 to 6, in which the control unit calculates the reception SINR based on assumed interference noise power due to non-regenerative relay in the second terminal station.

[Supplementary Note 8]

The control apparatus according to Supplementary Note 1, in which the first condition is based on the reception SINR calculated based on reception quality information reported by the second terminal station, a desired SINR, and a first margin.

[Supplementary Note 9]

A relay station including:

a communication unit that receives information regarding a second terminal station with a concern of interference with non-regenerative relay between a base station and a first terminal station via a relay station; and
a control unit that determines to stop the non-regenerative relay in a case where a first condition related to a reception signal-to-interference plus noise ratio (SINR) of a signal received by the second terminal station from the base station is satisfied at a timing at which the non-regenerative relay is performed.

[Supplementary Note 10]

The relay station according to Supplementary Note 9, in which the second terminal station is specified based on an assumed worst value of the reception SINR at the timing at which the non-regenerative relay is performed.

[Supplementary Note 11]

The relay station according to Supplementary Note 10, in which the worst value of the reception SINR is calculated based on a maximum value of assumed interference noise power due to the non-regenerative relay in the second terminal station.

[Supplementary Note 12]

The relay station according to any one of Supplementary Notes 9 to 11, in which the first condition is based on the assumed reception SINR at the timing at which the non-regenerative relay is performed, a desired SINR, and a first margin.

[Supplementary Note 13]

The relay station according to Supplementary Note 12, in which the control unit determines to restart the non-regenerative relay in a case where the non-regenerative relay is stopped and a second condition related to the assumed reception SINR on an assumption that the non-regenerative relay is performed is satisfied.

[Supplementary Note 14]

The relay station according to Supplementary Note 13, in which the second condition is based on the assumed reception SINR on the assumption that the non-regenerative relay is performed, a desired SINR, and a second margin.

[Supplementary Note 15]

The relay station according to any one of Supplementary Notes 12 to 14, in which the reception SINR is calculated based on assumed interference noise power due to non-regenerative relay in the second terminal station.

[Supplementary Note 16]

A control method of a control apparatus including:

specifying a second terminal station with a concern of interference with non-regenerative relay between a base station and a first terminal station via a relay station; and
notifying the relay station of a stop of the non-regenerative relay in a case where a first condition related to a reception signal-to-interference plus noise ratio (SINR) of a signal received by the second terminal station from the base station is satisfied at a timing at which the non-regenerative relay is performed.

The present application is based on Japanese Patent Application No. 2023-131050 filed on August 10, 2023. All the contents are included herein.

**Claims**

1. A control apparatus comprising:

   a control unit that specifies a second terminal station with a concern of interference with non-regenerative relay between a base station and a first terminal station via a relay station; and
   a communication unit that notifies the relay station of a stop of the non-regenerative relay in a case where a first condition related to a reception signal-to-interference plus noise ratio (SINR) of a signal received by the second terminal station from the base station is satisfied at a timing at which the non-regenerative relay is performed.

2. The control apparatus according to claim 1, wherein the control unit specifies the second terminal station based on an assumed worst value of the reception SINR at the timing at which the non-regenerative relay is performed.

3. The control apparatus according to claim 2, wherein the control unit calculates the worst value of the reception SINR based on a maximum value of assumed interference noise power due to the non-regenerative relay in the second terminal station.

4. The control apparatus according to claim 1, wherein the first condition is based on the assumed reception SINR at the timing at which the non-regenerative relay is performed, a desired SINR, and a first margin.

5. The control apparatus according to claim 4, wherein the communication unit notifies the relay station of a restart of the non-regenerative relay in a case where the non-regenerative relay is stopped and a second condition related to the assumed reception SINR on an assumption that the non-regenerative relay is performed is satisfied.

6. The control apparatus according to claim 5, wherein the second condition is based on the assumed reception SINR on the assumption that the non-regenerative relay is performed, a desired SINR, and a second margin.

7. The control apparatus according to any one of claims 4 to 6, wherein the control unit calculates the reception SINR based on assumed interference noise power due to non-regenerative relay in the second terminal station.

8. The control apparatus according to claim 1, wherein the first condition is based on the reception SINR calculated based on reception quality information reported by the second terminal station, a desired SINR, and a first margin.

9. A relay station comprising:

   a communication unit that receives information regarding a second terminal station with a concern of interference with non-regenerative relay between a base station and a first terminal station via a relay station; and
   a control unit that determines to stop the non-regenerative relay in a case where a first condition related to a reception signal-to-interference plus noise ratio (SINR) of a signal received by the second terminal station from the base station is satisfied at a timing at which the non-regenerative relay is performed.

10. The relay station according to claim 9, wherein the second terminal station is specified based on an assumed worst value of the reception SINR at the timing at which the non-regenerative relay is performed.

11. The relay station according to claim 10, wherein the worst value of the reception SINR is calculated based on a maximum value of assumed interference noise power due to the non-regenerative relay in the second terminal station.

12. The relay station according to claim 9, wherein the first condition is based on the assumed reception SINR at the timing at which the non-regenerative relay is performed, a desired SINR, and a first margin.

13. The relay station according to claim 12, wherein the control unit determines to restart the non-regenerative relay in a case where the non-regenerative relay is stopped and a second condition related to the assumed reception SINR on an assumption that the non-regenerative relay is performed is satisfied.

14. The relay station according to claim 13, wherein the second condition is based on the assumed reception SINR on the assumption that the non-regenerative relay is performed, a desired SINR, and a second margin.

15. The relay station according to any one of claims 12 to 14, wherein the reception SINR is calculated based on assumed interference noise power due to non-regenerative relay in the second terminal station.

16. A control method of a control apparatus comprising:

specifying a second terminal station with a concern of interference with non-regenerative relay between a base station and a first terminal station via a relay station; and
notifying the relay station of a stop of the non-regenerative relay in a case where a first condition related to a reception signal-to-interference plus noise ratio (SINR) of a signal received by the second terminal station from the base station is satisfied at a timing at which the non-regenerative relay is performed.

FIG. 1

EP 4 742 728 A1

CONTROL APPARATUS 10 (/BASE STATION 20/RELAY STATION 30/TERMINAL STATION 40)

110(/210/310/410)

CONTROL UNIT

120(/220/320/420)

COMMUNICATION UNIT

130(/230/330/430)

INPUT/OUTPUT UNIT

140(/240/340/440)

STORAGE UNIT

FIG. 2

EP 4 742 728 A1

CONTROL APPARATUS 10 (/BASE STATION 20/RELAY STATION 30/TERMINAL STATION 40)

510

520
RF CIRCUIT

530
PROCESSOR

540
NETWORK INTERFACE

550
INPUT DEVICE/ STORAGE DEVICE

560
MEMORY

570
STORAGE

FIG. 3

EP 4 742 728 A1

FIG. 4A

BASE STATION 20

510

520

530

RF CIRCUIT

PROCESSOR

FIG. 4B

DISTRIBUTED BASE
STATION 20a

CENTRAL BASE
STATION 20b

510

520

530

RF CIRCUIT

PROCESSOR

EP 4 742 728 A1

EP 4 742 728 A1

## FIG. 5A

## FIG. 5B

## FIG. 5C

## FIG. 5D

START

SPECIFY TERMINAL STATION WITH CONCERN OF
INTERFERENCE, BY CONTROL APPARATUS — S101

PROVIDE INSTRUCTION TO PERFORM NON-REGENERATIVE
RELAY IN COMMUNICATION WITH CERTAIN TERMINAL STATION
TO RELAY STATION, BY CONTROL APPARATUS — S102

PERFORM RELAY COMMUNICATION BY
NON-REGENERATIVE RELAY — S103

CALCULATE $\gamma_{RX,}^{UEi}$, WHICH IS ASSUMED RECEPTION SINR IN
TERMINAL STATION $UE_i$, BY CONTROL APPARATUS — S104

IS
STOPPING CONDITION
SATISFIED? — S105

No

Yes

STOP RELAY COMMUNICATION BY NON-REGENERATIVE RELAY — S106

CALCULATE $\gamma_{RX,}^{UEi}$, WHICH IS ASSUMED RECEPTION SINR IN
TERMINAL STATION $UE_i$, BY CONTROL APPARATUS — S107

IS
RESUMING CONDITION
SATISFIED? — S108

No

Yes

FIG. 6

FIG. 7

POWER LEVEL

$P_{TX}^{BS}$

$L_{BS \to UE_i, pre}$

$P_{TX,max}^{R}$

$L_{SI}^{R}$

$\gamma_{RX,min}^{UE_i}$

$D^{UE_i}$

$P_{IN,max}^{UE_i}$

$P_{N}^{UE_i}$

$P_{N}^{UE_i}$

ASSUMED RECEPTION SIGNAL FROM BASE STATION

SPECTRUM MASK OF NON-REGENERATIVE RELAY SIGNAL

FREQUENCY

EP 4 742 728 A1

$D^{UE_i}$
[dBr]

0

$f_c(b)$

$f_c(b_{R \to UE(R)})$

FREQUENCY

▨ SPECTRUM MASK OF NON-REGENERATIVE RELAY SIGNAL

FIG. 8

FIG. 9

START

SPECIFY TERMINAL STATION WITH CONCERN OF INTERFERENCE, BY CONTROL APPARATUS — S201

PROVIDE INSTRUCTION TO PERFORM NON-REGENERATIVE RELAY IN COMMUNICATION WITH CERTAIN TERMINAL STATION TO RELAY STATION, BY CONTROL APPARATUS — S202

PERFORM RELAY COMMUNICATION BY NON-REGENERATIVE RELAY — S203

CALCULATE $\gamma_{RX}^{UE_i}$, WHICH IS ASSUMED RECEPTION SINR IN TERMINAL STATION $UE_i$, BY RELAY STATION — S204

IS STOP CONDITION SATISFIED? — S205
No
Yes

STOP RELAY COMMUNICATION BY NON-REGENERATIVE RELAY — S206

CALCULATE $\gamma_{RX}^{UE_i}$, WHICH IS ASSUMED RECEPTION SINR IN TERMINAL STATION $UE_i$, BY RELAY STATION — S207

IS RESUMING CONDITION SATISFIED? — S208
No
Yes

FIG. 10

START

S301
SPECIFY TERMINAL STATION WITH CONCERN OF
INTERFERENCE, BY CONTROL APPARATUS

S302
PROVIDE INSTRUCTION TO PERFORM NON-REGENERATIVE
RELAY IN COMMUNICATION WITH CERTAIN TERMINAL STATION
TO RELAY STATION, BY CONTROL APPARATUS

S303
PERFORM RELAY COMMUNICATION BY NON-REGENERATIVE
RELAY

S304
CALCULATE $\gamma_{RX}^{UEi}$, WHICH IS RECEPTION SINR IN TERMINAL
STATION UE$_i$, BASED ON REPORTED RECEPTION QUALITY
INFORMATION, BY CONTROL APPARATUS

S305
IS
STOP CONDITION
SATISFIED?

No

Yes

S306
STOP RELAY COMMUNICATION BY NON-REGENERATIVE RELAY

S307
CALCULATE $\gamma_{RX}^{UEi,1}$, WHICH IS ASSUMED RECEPTION SINR IN
TERMINAL STATION UE$_i$, BASED ON REPORTED RECEPTION
QUALITY INFORMATION, BY CONTROL APPARATUS

S308
IS
RESUMING CONDITION
SATISFIED?

No

Yes

FIG. 11

| Reported value | Measured quantity value | Unit |
|---|---|---|
| SS-SINR_0 | SS-SINR<-23 | dB |
| SS-SINR_1 | $-23 \leq$ SS-SINR<-22.5 | dB |
| SS-SINR_2 | $-22.5 \leq$ SS-SINR<-22 | dB |
| SS-SINR_3 | $-22 \leq$ SS-SINR<-21.5 | dB |
| SS-SINR_4 | $-21.5 \leq$ SS-SINR<-21 | dB |
| : | : | : |
| SS-SINR_123 | $38 \leq$ SS-SINR<38.5 | dB |
| SS-SINR_124 | $38.5 \leq$ SS-SINR<39 | dB |
| SS-SINR_125 | $39 \leq$ SS-SINR<39.5 | dB |
| SS-SINR_126 | $39.5 \leq$ SS-SINR<40 | dB |
| SS-SINR_127 | $40 \leq$ SS-SINR | dB |

FIG. 12

FIG. 13

POWER LEVEL

FREQUENCY

$\gamma_{RX}^{UE_{i,0}}$

$\gamma_{RX}^{UE_i}$

$I^{R \rightarrow UE_i}$

$P_N^{UE_i}$

$P_N^{UE_i}$

RECEPTION SIGNAL FROM BASE STATION

RECEPTION SIGNAL FROM RELAY STATION

EP 4 742 728 A1

FIG. 14

RECEPTION SIGNAL FROM BASE STATION

RECEPTION SIGNAL FROM RELAY STATION

FIG. 15

Legend:
- (dotted) ASSUMED RECEPTION SIGNAL FROM BASE STATION
- (diagonal hatch) SPECTRUM MASK OF NON-REGENERATIVE RELAY SIGNAL OF RELAY STATION $R_1$
- (vertical hatch) SPECTRUM MASK OF NON-REGENERATIVE RELAY SIGNAL OF RELAY STATION $R_2$

Axis labels: POWER LEVEL, FREQUENCY

Power level markers: $P_{TX}^{BS}$, $P_{TX,max}^{R}$, $P_{IN,max}^{UE_i}$, $P_{N}^{UE_i}$

Annotations: $L_{BS \to UE_i, pre}$, $\gamma_{RX,min}^{UE_i}$, $L_{SI}^{R_2}$, $L_{SI}^{R_1}$, $D_{UE_i}^{R_2}$, $D_{UE_i}^{R_1}$

EP 4 742 728 A1

FIG. 16

EP 4 742 728 A1

## INTERNATIONAL SEARCH REPORT

| | International application No. |
|---|---|
| | **PCT/JP2024/028541** |

**A. CLASSIFICATION OF SUBJECT MATTER**

*H04W 16/26*(2009.01)i; *H04B 7/15*(2006.01)i; *H04B 17/336*(2015.01)i; *H04W 24/00*(2009.01)i; *H04W 72/54*(2023.01)i
FI: H04W16/26; H04B7/15; H04B17/336; H04W24/00; H04W72/54

According to International Patent Classification (IPC) or to both national classification and IPC

**B. FIELDS SEARCHED**

Minimum documentation searched (classification system followed by classification symbols)

H04W16/26; H04B7/15; H04B17/336; H04W24/00; H04W72/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-195598 A (SONY CORPORATION) 05 November 2015 (2015-11-05) entire text, all drawings | 1-16 |
| A | WO 2021/038644 A1 (NIPPON TELEGRAPH AND TELEPHONE CORPORATION) 04 March 2021 (2021-03-04) entire text, all drawings | 1-16 |

☐ Further documents are listed in the continuation of Box C.   ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2024** | **15 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/028541**

| Patent document cited in search report | Publication date (day/month/year) | Patent family member(s) | Publication date (day/month/year) |
|---|---|---|---|
| JP 2015-195598 A | 05 November 2015 | US 2012/0201190 A1<br>entire document<br>WO 2011/036947 A1<br>EP 2472956 A1<br>CN 102511184 A | |
| WO 2021/038644 A1 | 04 March 2021 | US 2022/0369120 A1<br>entire document | |

Form PCT/ISA/210 (patent family annex) (July 2022)

EP 4 742 728 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023131050 A